# EUROPEAN PATENT APPLICATION

(11) **EP 4 661 566 A1**
(43) Date of publication of application: **10.12.2025**
(21) Application number: 24750599.3
(22) Date of filing: 01.02.2024
(51) Int. Cl.: H04W 72/25, H04L 27/26, H04L 5/06, H04W 74/08, H04B 17/318, H04L 5/00, H04W 72/04

(54) **METHOD AND DEVICE FOR EXPANDING CP APPLIED TO INTER-UE TRANSMISSION IN SHARED SPECTRUM**

(30) Priority: 02.02.2023 KR 20230014361; 08.03.2023 KR 20230030704; 22.03.2023 KR 20230037487; 24.04.2023 US 202363461579 P; 04.05.2023 KR 20230058460; 08.09.2023 KR 20230119714
(71) Applicant: LG Electronics Inc., Yeongdeungpo-gu Seoul 07336 (KR)
(72) Inventor: HWANG, Daesung, Seoul 06772 (KR); LEE, Seungmin, Seoul 06772 (KR)
(74) Representative: Frenkel, Matthias Alexander
(86) International application number: PCT/KR2024/001554
(87) International publication number: WO 2024/162802

(57) **Abstract**

An operating method of a first device (100) in a wireless communication system is presented. The method may comprise the steps of: performing first device-to-device transmission on the basis of a first resource included in a COT; determining, on the basis that a first time gap between second resources is larger than 16 usec, which is before the first resource and a first CPE are applied, the duration of the first CPE so that a second time gap between the second resources becomes 16 usec after the first resource and the first CPE are applied; and applying the first CPE on the basis of a second resource included in the COT, so as to perform second device-to-device transmission.

## Description

### TECHNICAL FIELD

This disclosure relates to a wireless communication system.

### BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

According to an embodiment of the present disclosure, a method for performing, by a first device, wireless communication may be proposed. For example, the method may comprise: obtaining information for a channel occupancy, CO, on a shared spectrum; obtaining information for a first resource and a second resource, included within a channel occupancy time, COT, related to the CO; performing a first inter-device transmission, based on the first resource; based on a first time gap between the first resource and the second resource, before a first cyclic prefix extension, CPE, is applied, being greater than 16 usec, determining a duration of the first CPE such that a second time gap between the first resource and the second resource, after the first CPE is applied, is 16 usec; and performing a second inter-device transmission by applying the first CPE, based on the second resource.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations comprise: obtaining information for a channel occupancy, CO, on a shared spectrum; obtaining information for a first resource and a second resource, included within a channel occupancy time, COT, related to the CO; performing a first inter-device transmission, based on the first resource; based on a first time gap between the first resource and the second resource, before a first cyclic prefix extension, CPE, is applied, being greater than 16 usec, determining a duration of the first CPE such that a second time gap between the first resource and the second resource, after the first CPE is applied, is 16 usec; and performing a second inter-device transmission by applying the first CPE, based on the second resource.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: obtaining information for a channel occupancy, CO, on a shared spectrum; obtaining information for a first resource and a second resource, included within a channel occupancy time, COT, related to the CO; performing a first inter-UE transmission, based on the first resource; based on a first time gap between the first resource and the second resource, before a first cyclic prefix extension, CPE, is applied, being greater than 16 usec, determining a duration of the first CPE such that a second time gap between the first resource and the second resource, after the first CPE is applied, is 16 usec; and performing a second inter-UE transmission by applying the first CPE, based on the second resource.

According to an embodiment of the present disclosure, a non-transitory computer-readable storage medium storing instructions may be proposed. For example, based on being executed, the instructions may cause a first device to: obtain information for a channel occupancy, CO, on a shared spectrum; obtain information for a first resource and a second resource, included within a channel occupancy time, COT, related to the CO; perform a first inter-device transmission, based on the first device; based on a first time gap between the first resource and the second resource, before a first cyclic prefix extension, CPE, is applied, being greater than 16 usec, determining a duration of the first CPE such that a second time gap between the first resource and the second resource, after the first CPE is applied, is 16 usec; and perform a second inter-device transmission by applying the first CPE, based on the second resource.

According to an embodiment of the present disclosure, a method for performing, by a second device, wireless communication may be proposed. For example, the method may comprise: generating a channel occupancy, CO, on a shared spectrum; transmitting, to a first device, information for the CO; receiving, from the first device, a first inter-device transmission, based on a first resource included within a channel occupancy time, COT, related to the CO; and receiving, from the first device, a second inter-device transmission, based on a second resource included within the COT, wherein based on a first time gap between the first resource and the second resource, before a first cyclic prefix extension, CPE, is applied, being greater than 16 usec, a duration of the first CPE applied to the second resource may be determined such that a second time gap between the first resource and the second resource, after the first CPE is applied, is 16 usec.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: generating a channel occupancy, CO, on a shared spectrum; transmitting, to a first device, information for the CO; receiving, from the first device, a first inter-device transmission, based on a first resource included within a channel occupancy time, COT, related to the CO; and receiving, from the first device, a second inter-device transmission, based on a second resource included within the COT, wherein based on a first time gap between the first resource and the second resource, before a first cyclic prefix extension, CPE, is applied, being greater than 16 usec, a duration of the first CPE applied to the second resource may be determined such that a second time gap between the first resource and the second resource, after the first CPE is applied, is 16 usec.

### BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows an example of an NTN typical scenario based on a transparent payload, according to one embodiment of the present disclosure.
FIG. 4 shows an example of an NTN typical scenario based on a regenerative payload, according to one embodiment of the present disclosure.
FIG. 5 shows an example of a sensing operation, according to one embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows an example of a wireless communication system supporting an unlicensed band, based on an embodiment of the present disclosure.
FIG. 10 shows a method of occupying resources in an unlicensed band, based on an embodiment of the present disclosure.
FIG. 11 shows a case in which a plurality of LBT-SBs are included in an unlicensed band, based on an embodiment of the present disclosure.
FIG. 12 shows CAP operations performed by a base station to transmit a downlink signal through an unlicensed band, based on an embodiment of the present disclosure.
FIG. 13 shows type 1 CAP operations performed by a UE to transmit an uplink signal, based on an embodiment of the present disclosure.
FIG. 14 shows applying CPE to the first symbol of the transmission resource according to an embodiment of the present disclosure.
FIG. 15 shows a method of applying CPE when there is a 1-symbol interval between two transmission resources within a COT, according to an embodiment of the present disclosure.
FIG. 16 shows a method of applying a CPE when there is a gap of two symbols between two transmission resources within a CO, according to one embodiment of the present disclosure.
FIG. 17 shows a procedure for a first device to perform wireless communication, according to one embodiment of the present disclosure.
FIG. 18 shows a procedure for a second device to perform wireless communication, according to one embodiment of the present disclosure.
FIG. 19 shows a communication system 1, based on an embodiment of the present disclosure.
FIG. 20 shows wireless devices, based on an embodiment of the present disclosure.
FIG. 21 shows a signal process circuit for a transmission signal, based on an embodiment of the present disclosure.
FIG. 22 shows another example of a wireless device, based on an embodiment of the present disclosure.
FIG. 23 shows a hand-held device, based on an embodiment of the present disclosure.
FIG. 24 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

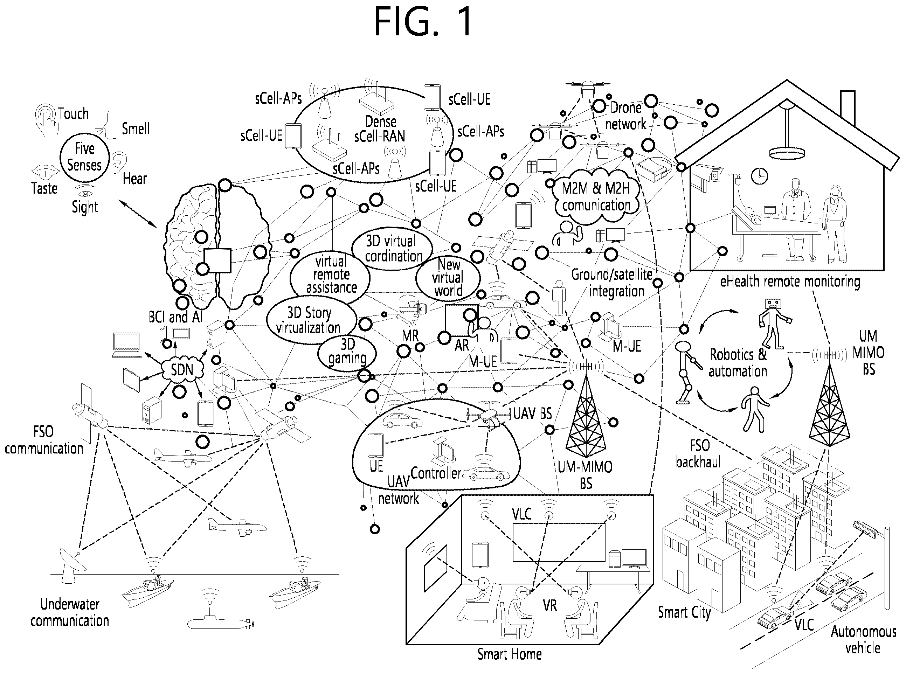

FIG. 1 shows a communication structure that can be provided in a 6G system, according to one embodiment of the present disclosure. The embodiment of FIG. 1 may be combined with various embodiments of the present disclosure.

In 6G, new network features may include the follows.
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer
- Ubiquitous super 3D connectivity: Super 3D connection will be generated from 6G ubiquity to access networks and core network functions on drones and very low Earth orbit satellites.

Given the above new network characteristics of 6G, some common requirements may be as follows
- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

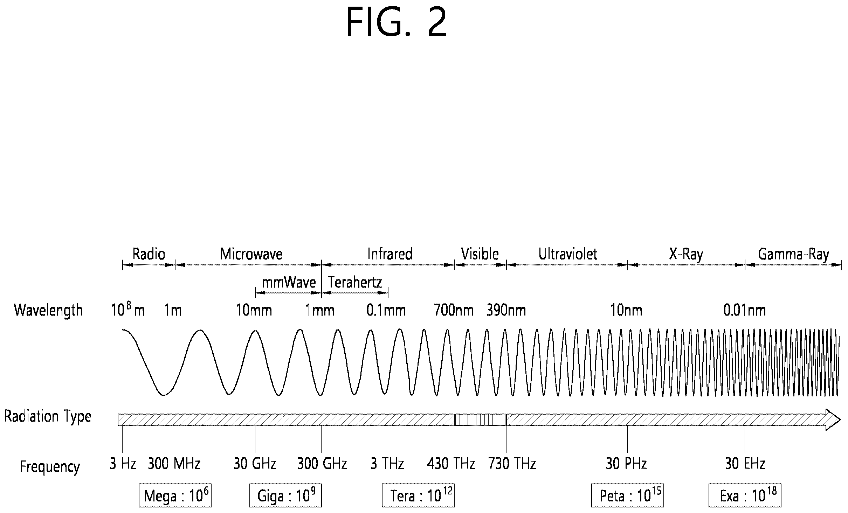

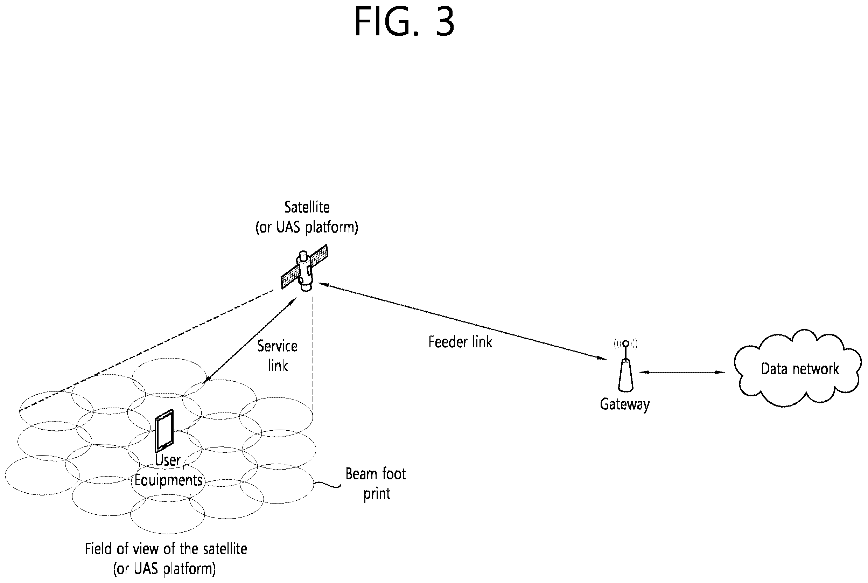

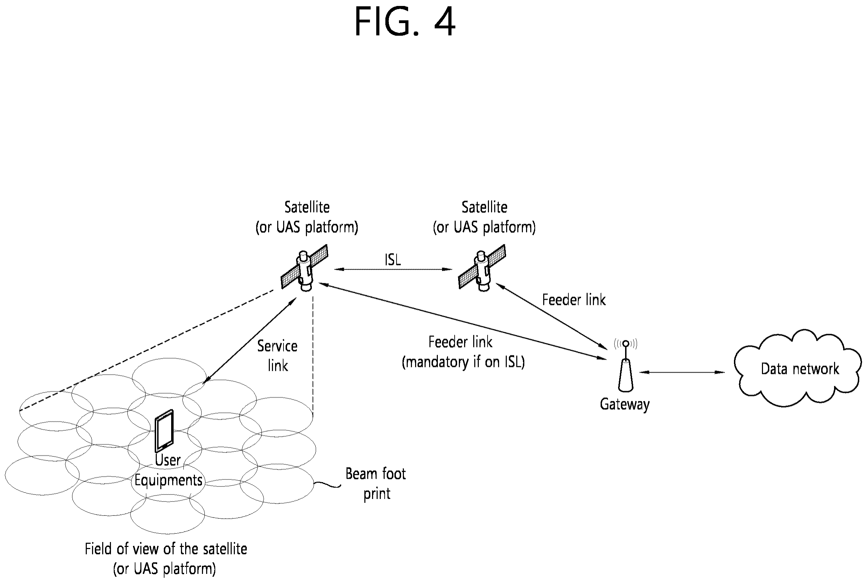

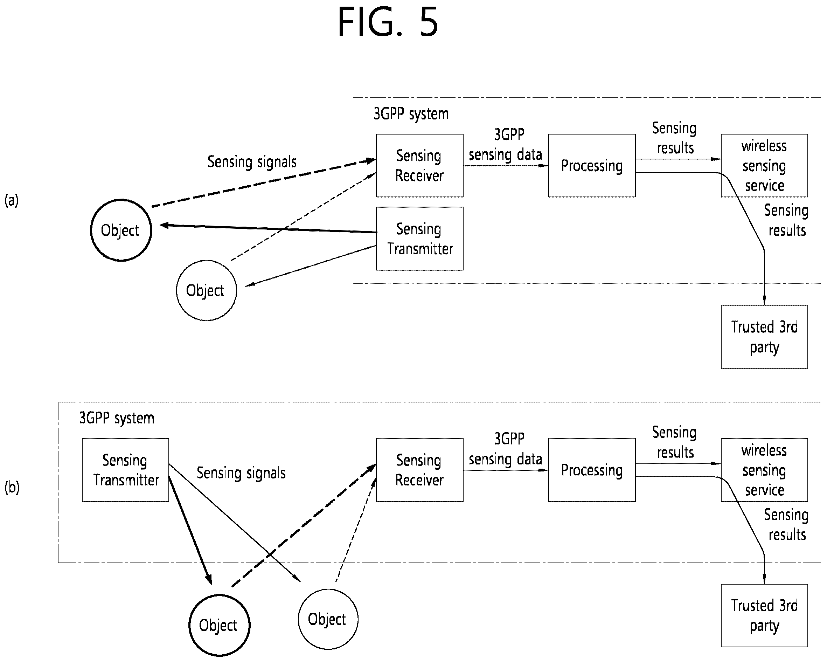

The following describes the core implementation technologies for 6G systems.
- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Bmeaforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility, AAM: AAM is the higher-level concept of urban air mobility (UAM), which refers to air transportation in urban centers, and may include travel between urban centers and regional hubs.
- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.
- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).
- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, i.e., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{slot}_{symb}), the number of slots per frame (N^{frame,u}ₛₗₒₜ), and the number of slots per subframe (N^{subframe,u}ₛₗₒₜ), according to an SCS configuration (u), when Normal CP or Extended CP is used.

**[Table 2]**

| CP Type | SCS (15*2^{u}) | N^{slots}_{symb} | N^{frame,u}ₛₗₒₜ | N^{subframe,u}ₛₗₒₜ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

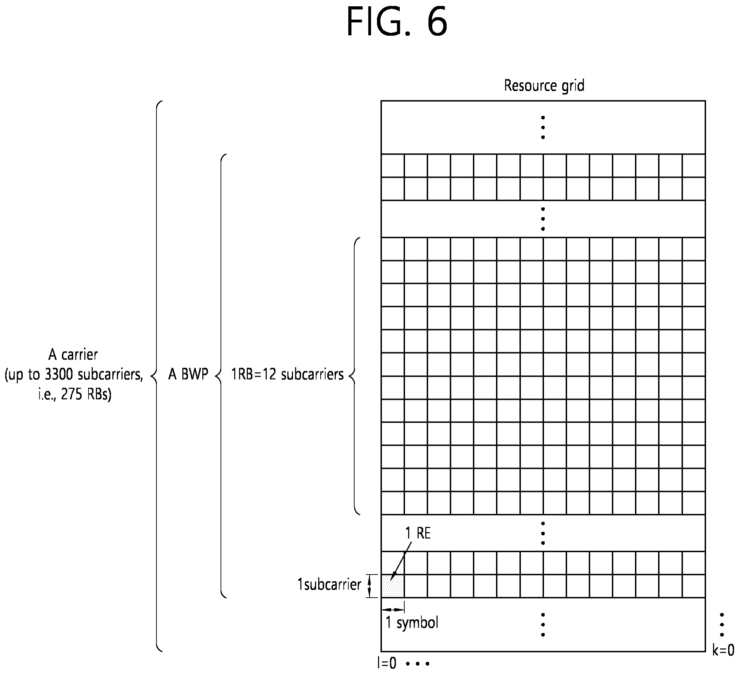

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

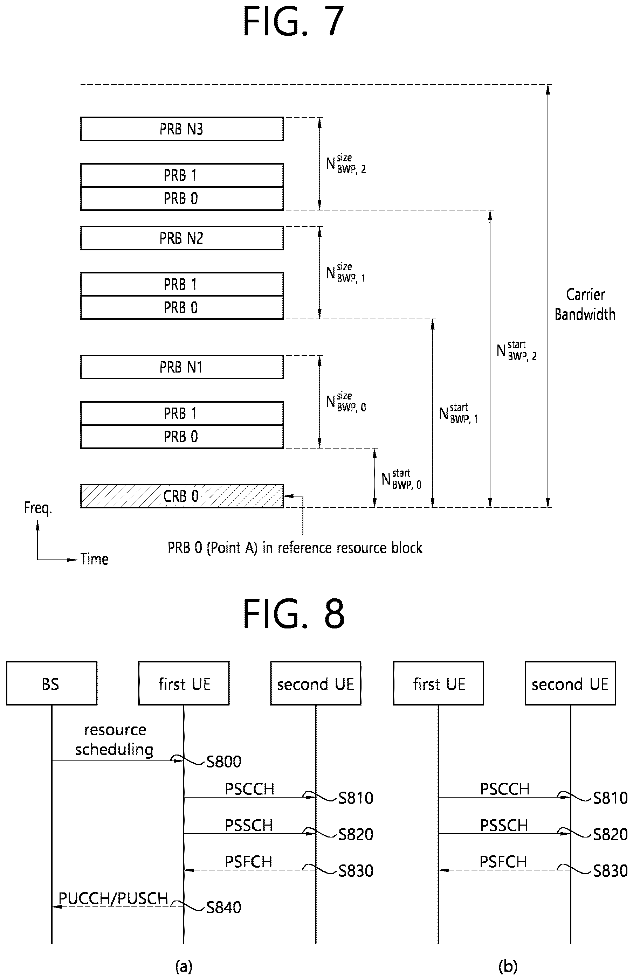

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In this specification, a PSCCH may be replaced by a control channel, a physical control channel, a control channel related to a sidelink, a physical control channel related to a sidelink, etc. In this specification, a PSSCH may be replaced by a shared channel, a physical shared channel, a shared channel related to a sidelink, a physical shared channel related to a sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits as defined in Table 5
- Beta_offset indicator - 2 bits as provided by higher layer parameter sl-BetaOffsets2ndSCI
- Number of DMRS port - 1 bit as defined in Table 4
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

**[Table 3]**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

**[Table 4]**

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 3
- CSI request - 1 bit

**[Table 5]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Meanwhile, in the conventional unlicensed spectrum (NR-U), a communication method between a UE and a base station is supported in an unlicensed band. In addition, a mechanism for supporting communication in an unlicensed band between sidelink UEs is planned to be supported in Rel-18.

In the present disclosure, a channel may refer to a set of frequency domain resources in which Listen-Before-Talk (LBT) is performed. In NR-U, the channel may refer to an LBT bandwidth with 20 MHz and may have the same meaning as an RB set. For example, the RB set may be defined in section 7 of 3GPP TS 38.214 V17.0.0.

In the present disclosure, channel occupancy (CO) may refer to time/frequency domain resources obtained by the base station or the UE after LBT success.

In the present disclosure, channel occupancy time (COT) may refer to time domain resources obtained by the base station or the UE after LBT success. It may be shared between the base station (or the UE) and the UE (or the base station) that obtained the CO, and this may be referred to as COT sharing. Depending on the initiating device, this may be referred to as gNB-initiated COT or UE-initiated COT.

Hereinafter, a wireless communication system supporting an unlicensed band/shared spectrum will be described.

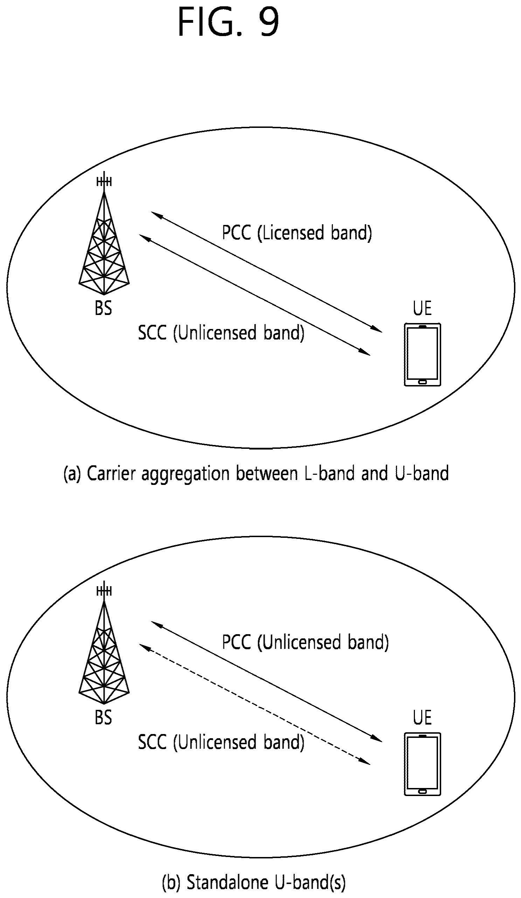

FIG. 9 shows an example of a wireless communication system supporting an unlicensed band, based on an embodiment of the present disclosure. For example, FIG. 9 may include an unlicensed spectrum (NR-U) wireless communication system. The embodiment of FIG. 9 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 9, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 9. In other words, the base station and the UE may transmit and receive signals only on UCC(s) without using any LCC. For a standalone operation, PRACH transmission, PUCCH transmission, PUSCH transmission, SRS transmission, etc. may be supported on a UCell.

In the embodiment of FIG. 9, the base station may be replaced with the UE. In this case, for example, PSCCH transmission, PSSCH transmission, PSFCH transmission, S-SSB transmission, etc. may be supported on a UCell.

Unless otherwise mentioned, the following definitions may be applied to terms used herein. For example, unlicensed spectrum and shared spectrum may be mutually interchangeable/substitutable in this disclosure. For example, channel sensing (on shared spectrum) in the present disclosure may refer to channel sensing related to a channel access procedure (CAP). The CAP may include a step of (channel) sensing for a resource (or, channel) on which a transmission is to be performed.
- Channel: a carrier or a part of a carrier composed of a contiguous set of RBs in which a channel access procedure is performed in a shared spectrum.
- Channel access procedure (CAP): a procedure of assessing channel availability based on sensing before signal transmission in order to determine whether other communication node(s) are using a channel. A basic sensing unit is a sensing slot with a duration of Tₛₗ = 9 us. The base station or the UE senses a channel during a sensing slot duration. If power detected for at least 4 us within the sensing slot duration is less than an energy detection threshold Xₜₕᵣₑₛₕ, the sensing slot duration Tₛₗ is considered to be idle. Otherwise, the sensing slot duration Tₛₗ = 9 us is considered to be busy. CAP may also be referred to as listen before talk (LBT). For example, a channel access procedure (CAP) may include an LBT, and channel sensing may be performed to monitor the power of that channel during a specific time interval (channel sensing interval) for the CAP.
- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.
- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.
- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB1, the PDSCH carrying SIB1, and/or non-zero power CSI-RS.

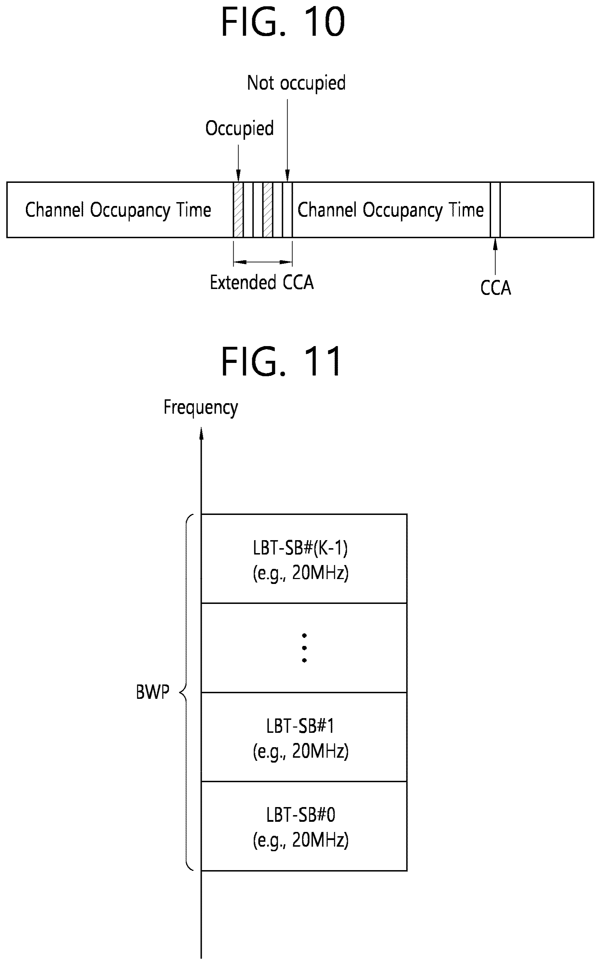

FIG. 10 shows a method of occupying resources in an unlicensed band, based on an embodiment of the present disclosure. The embodiment of FIG. 10 may be combined with various embodiments of the present disclosure.

Referring to FIG. 10, a communication node (e.g., base station, UE) within an unlicensed band should determine whether other communication node(s) is using a channel before signal transmission. To this end, the communication node within the unlicensed band may perform a channel access procedure (CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is the that clear channel assessment (CCA) is confirmed. If a CCA threshold (e.g., X_{Thresh}) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT. For example, a channel access procedure (CAP) may include an LBT, and channel sensing may be performed to monitor the power of that channel during a specific time interval (channel sensing interval) for the CAP.

Table 6 shows an example of the channel access procedure (CAP) supported in NR-U.

**[Table 6]**

| | Type | Explanation |
|---|---|---|
| DL | Type 1 CAP | CAP with random back-off |
| | | - time duration spanned by the sensing slots that are sensed to be idle before a downlink transmission(s) is random |
| | Type 2 CAP | CAP without random back-off |
| | | - time duration spanned by sensing slots that are sensed to be idle before a downlink transmission(s) is deterministic |
| | - Type 2A, 2B, 2C | |
| UL or SL | Type 1 CAP | CAP with random back-off |
| | | - time duration spanned by the sensing slots that are sensed to be idle before an uplink or sidelink transmission(s) is random |
| | Type 2 CAP | CAP without random back-off |
| | | - time duration spanned by sensing slots that are sensed to be idle before an uplink or sidelink transmission(s) is deterministic |
| | - Type 2A, 2B, 2C | |

Referring to Table 6, the LBT type or CAP for DL/UL/SL transmission may be defined. However, Table 6 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or BWP configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 11 shows a case in which a plurality of LBT-SBs are included in an unlicensed band, based on an embodiment of the present disclosure. The embodiment of FIG. 11 may be combined with various embodiments of the present disclosure.

Referring to FIG. 11, a plurality of LBT-SBs may be included in the BWP of a cell (or carrier). An LBT-SB may have, for example, a 20-MHz band. The LBT-SB may include a plurality of contiguous (P)RBs in the frequency domain, and thus may be referred to as a (P)RB set. While not shown, a guard band (GB) may be interposed between LBT-SBs. Accordingly, the BWP may be configured in the form of {LBT-SB #0 (RB set #0)+GB #0+LBT-SB #1 (RB set #1+GB #1) + ... +LBT-SB #(K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC CEs and radio bearers may be fixed or configured to operate in FR1:
- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 7 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

**[Table 7]**

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

### (1) Type 1 downlink (DL) CAP Method

In the type 1 DL CAP, the length of a time duration spanned by sensing slots sensed to be idle before transmission(s) may be random. The type 1 DL CAP may be applied to the following transmissions:
- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

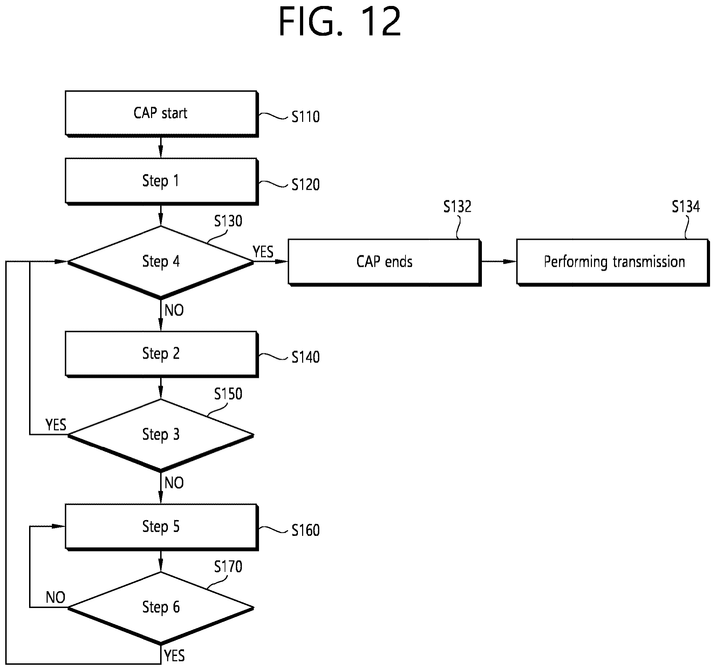

FIG. 12 shows CAP operations performed by a base station to transmit a downlink signal through an unlicensed band, based on an embodiment of the present disclosure. The embodiment of FIG. 12 may be combined with various embodiments of the present disclosure.

Referring to FIG. 12, the base station may sense whether a channel is idle for sensing slot durations of a defer duration T_{d}. Then, if a counter N is zero, the base station may perform transmission (S134). In this case, the base station may adjust the counter N by sensing the channel for additional sensing slot duration(s) according to the following steps:
Step 1) (S120) The base station sets N to Nᵢₙᵢₜ (N= Nᵢₙᵢₜ), where Nᵢₙᵢₜ is a random number uniformly distributed between 0 and CWₚ. Then, step 4 proceeds.
Step 2) (S140) If N>0 and the base station determines to decrease the counter, the base station sets N to N-1 (N=N-1).
Step 3) (S150) The base station senses the channel for the additional sensing slot duration. If the additional sensing slot duration is idle (Y), step 4 proceeds. Otherwise (N), step 5 proceeds.
Step 4) (S130) If N=0 (Y), the base station terminates the CAP (S132). Otherwise (N), step 2 proceeds.
Step 5) (S160) The base station senses the channel until either a busy sensing slot is detected within an additional defer duration T_{d} or all the slots of the additional defer duration T_{d} are detected to be idle.
Step 6) (S170) If the channel is sensed to be idle for all the slot durations of the additional defer duration T_{d} (Y), step 4 proceeds. Otherwise (N), step 5 proceeds.

Table 8 shows that mₚ, a minimum contention window (CW), a maximum CW, a maximum channel occupancy time (MCOT), and an allowed CW size, which are applied to the CAP, vary depending on channel access priority classes.

**[Table 8]**

| Channel Access Priority Class (p) | mₚ | CW_{min,p} | CW_{max,p} | T_{mcot,p} | allowed CWₚ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 8, a contention window size (CWS), a maximum COT value, etc. for each CAPC may be defined. For example, T_{d} may be equal to T_{f} + mₚ * Tₛₗ (T_{d} = T_{f} + mₚ * Tₛₗ),

The defer duration T_{d} is configured in the following order: duration T_{f} (16 us) + mₚ consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on HARQ-ACK feedback (e.g., the ratio of ACK or NACK) for a previous DL burst (e.g., PDSCH) (CW size update). For example, CWₚ may be initialized to CW_{min,p} based on the HARQ-ACK feedback for the previous DL burst. Alternatively, CWₚ may be increased to the next higher allowed value or maintained as it is.

### (2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions. In the type 2A DL CAP, the base station may perform transmission immediately after the channel is sensed to be idle at least for a sensing duration T_{short_dl} = 25 us. Herein, T_{short_dl} includes the duration T_{f} (=16 us) and one sensing slot duration immediately after the duration T_{f}, where the duration T_{f} includes a sensing slot at the beginning thereof.
- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for Tr = 16 us. T_{f} includes a sensing slot within 9 us from the end of the duration. The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UL signal transmission in an unlicensed band. In general, the UE may perform the CAP (e.g., type 1 or type 2) configured by the base station for UL signal transmission. For example, a UL grant scheduling PUSCH transmission (e.g., DCI formats 0_0 and 0_1) may include CAP type indication information for the UE.

### (1) Type 1 uplink (UL) CAP Method

In the type 1 UL CAP, the length of a time duration spanned by sensing slots sensed to be idle before transmission(s) is random. The type 1 UL CAP may be applied to the following transmissions.
- PUSCH/SRS transmission(s) scheduled and/or configured by the base station
- PUCCH transmission(s) scheduled and/or configured by the base station
- Transmission(s) related to a random access procedure (RAP)

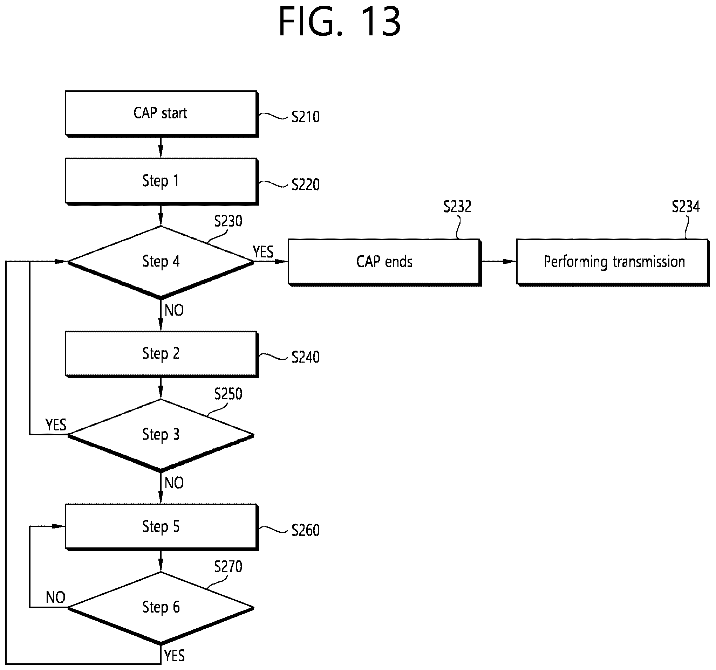

FIG. 13 shows type 1 CAP operations performed by a UE to transmit an uplink signal, based on an embodiment of the present disclosure. The embodiment of FIG. 13 may be combined with various embodiments of the present disclosure.

Referring to FIG. 13, the UE may sense whether a channel is idle for sensing slot durations of a defer duration T_{d}. Then, if a counter N is zero, the UE may perform transmission (S234). In this case, the UE may adjust the counter N by sensing the channel for additional sensing slot duration(s) according to the following steps:
Step 1) (S220) The UE sets N to Nᵢₙᵢₜ (N = Nᵢₙᵢₜ), where Nᵢₙᵢₜ is a random number uniformly distributed between 0 and CWₚ. Then, step 4 proceeds.
Step 2) (S240) If N>0 and the UE determines to decrease the counter, the UE sets N to N-1 (N = N-1).
Step 3) (S250) The UE senses the channel for the additional sensing slot duration. If the additional sensing slot duration is idle (Y), step 4 proceeds. Otherwise (N), step 5 proceeds.
Step 4) (S230) If N=0 (Y), the UE terminates the CAP (S232). Otherwise (N), step 2 proceeds.
Step 5) (S260) The UE senses the channel until either a busy sensing slot is detected within an additional defer duration T_{d} or all the slots of the additional defer duration T_{d} are detected to be idle.
Step 6) (S270) If the channel is sensed to be idle for all the slot durations of the additional defer duration T_{d} (Y), step 4 proceeds. Otherwise (N), step 5 proceeds.

Table 9 shows that mₚ, a minimum CW, a maximum CW, a maximum channel occupancy time (MCOT), and an allowed CW size, which are applied to the CAP, vary depending on channel access priority classes.

**[Table 9]**

| Channel Access Priority Class (p) | mₚ | CW_{min,p} | CW_{max,p} | T_{ulmcot,p} | allowed CWₚ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 9, a contention window size (CWS), a maximum COT value, etc. for each CAPC may be defined. For example, T_{d} may be equal to T_{f} + mₚ * Tₛₗ (T_{d} = T_{f} + mₚ * Tₛₗ),

The defer duration T_{d} is configured in the following order: duration T_{f} (16 us) + mₚ consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on an explicit/implicit reception response for a previous UL burst (e.g., PUSCH) (CW size update). For example, CWₚ may be initialized to CW_{min,p} based on the explicit/implicit reception response for the previous UL burst. Alternatively, CWₚ may be increased to the next higher allowed value or maintained as it is.

### (2) Type 2 uplink (UL) CAP Method

In the type 2 UL CAP, the length of a time duration spanned by sensing slots sensed to be idle before transmission(s) may be determined. The type 2 UL CAP is classified into type 2A/2B/2C UL CAPs. In the type 2A UL CAP, the UE may perform transmission immediately after the channel is sensed to be idle at least for a sensing duration T_{short_dl} = 25 us. Herein, T_{short_dl} includes the duration T_{f} (=16 us) and one sensing slot duration immediately after the duration T_{f}. In the type 2A UL CAP, T_{f} includes a sensing slot at the beginning thereof. In the type 2B UL CAP, the UE may perform transmission immediately after the channel is sensed to be idle for the sensing duration T_{f} = 16 us. In the type 2B UL CAP, Tr includes a sensing slot within 9 us from the end of the duration. In the type 2C UL CAP, the UE does not perform channel sensing before performing transmission.

For example, according to the type 1 LBT-based NR-U operation, the UE having uplink data to be transmitted may select a CAPC mapped to 5QI of data, and the UE may perform the NR-U operation by applying parameters of the corresponding CACP (e.g., minimum contention window size, maximum contention window size, mₚ, etc.). For example, the UE may select a backoff counter (BC) after selecting a random value between the minimum CW and the maximum CW mapped to the CAPC. In this case, for example, the BC may be a positive integer less than or equal to the random value. The UE sensing a channel decreases the BC by 1 if the channel is idle. If the BC becomes zero and the UE detects that the channel is idle for the time T_{d} (T_{d} = T_{f} + mₚ * Tₛₗ), the UE may attempt to transmit data by occupying the channel. For example, Tₛₗ (= 9 usec) is a basic sensing unit or sensing slots, and may include a measurement duration for at least 4 usec. For example, the front 9 usec of T_{f} (= 16 usec) may be configured to be Tₛₗ.

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 25 usec gap. The type 2A may be used to initiate transmission of SSB and non-unicast DL information. That is, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. That is, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

In a sidelink unlicensed band, the UE may perform a channel access operation based on Listen Before Talk (LBT). Before the UE accesses a channel in an unlicensed band, the UE should check whether the channel to be accessed is idle (e.g., a state in which UEs do not occupy the channel, a state in which UEs can access the corresponding channel and transmit data) or busy (e.g., a state in which the channel is occupied and data transmission/reception is performed on the corresponding channel, and the UE attempting to access the channel cannot transmit data while the channel is busy). That is, the operation in which the UE checks whether the channel is idle or busy may be referred to as Clear Channel Assessment (CCA), and the UE may check whether the channel is idle or busy for the CCA duration.

Meanwhile, in a future system, a UE may perform a sidelink transmission and/or reception operation in an unlicensed band. For operations in an unlicensed band, depending on band-specific regulations or requirements, a UE's transmission may be preceded by a channel sensing operation (e.g., energy detection/measurement) for the channel to be used, a UE may perform a transmission in the unlicensed band only if, as a result of the channel sensing, the channel or RB set to be used is determined to be IDLE (e.g., if the measured energy is less than or equal to or greater than a certain threshold value), and, if, according to a result of the channel sensing, the channel or RB set to be used is determined to be BUSY (e.g., if the measured energy is greater than or equal to or greater than a certain threshold value), the UE may cancel all or part of the transmission in the unlicensed band.

Meanwhile, in operation in an unlicensed band, a UE may omit or simplify the channel sensing operation (i.e., make the channel sensing interval relatively small) within a certain time interval after a transmission for a certain time period, or conversely, after a certain time interval after the transmission, the UE may decide whether to transmit or not after performing the usual channel sensing operation.

On the other hand, in a transmission in an unlicensed band, depending on regulations or requirements, the size and/or power spectral density (PSD) of the time interval and/or frequency occupied region of the signal/channel transmitted by the UE may be greater than or equal to a certain level, respectively.

On the other hand, in unlicensed bands, in order to simplify channel sensing, it may be informed through channel occupancy time (COT) interval information that the channel obtained through initial general channel sensing is occupied for a certain period of time, and the length of the COT duration may be configured to have different maximum values depending on the priority of the service or data packet or the channel access priority class (CAPC).

On the one hand, a base station may share a COT duration that it has secured through channel sensing in the form of a DCI transmission, and a UE may perform a specific (indicated) channel sensing type and/or CP extension within the COT duration based on the DCI information received from the base station. On the other hand, a UE may share a COT duration that it has secured through channel sensing to a base station that is the destination of the UE's UL transmission, and the relevant information may be provided through the UL via CG-UCI. In the above situation, the base station may perform simplified channel sensing within the COT duration shared by the UE.

In the case of SL communication, there are situations where a UE is indicated by a base station to use resources for SL transmission through DCI or RRC signaling, such as Mode 1 RA operation, and there are situations where a UE performs SL transmission and reception through sensing operation between UEs without the assistance of a base station, such as Mode 2 RA operation.

On the other hand, for channel access type 1, which can be used regardless of the channel occupancy time (COT) configuration, the procedures shown in Table 10 and Table 11 for DL transmissions and Table 12 and Table 13 for UL transmissions were performed.

In the present disclosure, channel access may be mutually replaceable/substitutable with channel sensing.

**[Table 10]**

| | | |
|---|---|---|
| The eNB/gNB may transmit a transmission after first sensing the channel to be idle during the sensing slot durations of a defer duration *T_{d}* and after the counter *N* is zero in step 4. The counter *N* is adjusted by sensing the channel for additional sensing slot duration(s) according to the steps below: | | |
| | 1) set *N = Nᵢₙᵢₜ,* where *Nᵢₙᵢₜ* is a random number uniformly distributed between 0 and *CWₚ,* and go to step 4; | |
| | 2) if *N* > 0 and the eNB/gNB chooses to decrement the counter, set *N = N -* 1; | |
| | 3) sense the channel for an additional sensing slot duration, and if the additional sensing slot duration is idle, go to step 4; else, go to step 5; | |
| | 4) if *N* = 0, stop; else, go to step 2. | |
| | 5) sense the channel until either a busy sensing slot is detected within an additional defer duration *T_{d}* or all the sensing slots of the additional defer duration *T_{d}* are detected to be idle; | |
| | 6) if the channel is sensed to be idle during all the sensing slot durations of the additional defer duration *T_{d}*, go to step 4; else, go to step 5; | |
| If an eNB/gNB has not transmitted a transmission after step 4 in the procedure above, the eNB/gNB may transmit a transmission on the channel, if the channel is sensed to be idle at least in a sensing slot duration *Tₛₗ* when the eNB/gNB is ready to transmit and if the channel has been sensed to be idle during all the sensing slot durations of a defer duration *T_{d}* immediately before this transmission. If the channel has not been sensed to be idle in a sensing slot duration *Tₛₗ* when the eNB/gNB first senses the channel after it is ready to transmit or if the channel has been sensed to be not idle during any of the sensing slot durations of a defer duration *T_{d}* immediately before this intended transmission, the eNB/gNB proceeds to step 1 after sensing the channel to be idle during the sensing slot durations of a defer duration *T_{d}*. | | |
| The defer duration *T_{d}* consists of duration *T_{f} =* 16us immediately followed by *mₚ* consecutive sensing slot durations *Tₛₗ,* and *T_{f}* includes an idle sensing slot duration *Tₛₗ* at start of *T_{f}.* | | |

**[Table 11]**

| | | |
|---|---|---|
| If a gNB transmits transmissions including PDSCH that are associated with channel access priority class p on a channel, the gNB maintains the contention window value *CWₚ* and adjusts *CWₚ* before step 1 of the procedure described in clause 4.1.1 for those transmissions using the following steps: | | |
| | 1) For every priority class *p* ∈ {1,2,3,4}, set *CWₚ = CW_{min, p}.* | |
| | 2) If HARQ-ACK feedback is available after the last update of *Wₚ* , go to step 3. Otherwise, if the gNB transmission after procedure described in clause 4.1.1 does not include a retransmission or is transmitted within a duration *T_{w}* from the end of the *reference duration* corresponding to the earliest DL channel occupancy after the last update of *CWₚ,* go to step 5; otherwise go to step 4. | |
| | 3) The HARQ-ACK feedback(s) corresponding to PDSCH(s) in the reference duration for the latest DL channel occupancy for which HARQ-ACK feedback is available is used as follows: | |
| | | a. If at least one HARQ-ACK feedback is 'ACK' for PDSCH(s) with transport block based feedback or at least 10% of HARQ-ACK feedbacks is 'ACK' for PDSCH CBGs transmitted at least partially on the channel with code block group based feedback, go to step 1; otherwise go to step 4. |
| | 4) Increase *CWₚ* for every priority class *p* ∈ {1,2,3,4} to the next higher allowed value. | |
| | 5) For every priority class p ∈ {1,2,3,4}, maintain CWₚ as it is; go to step 2. | |
| The *reference duration* and duration *T_{w}* in the procedure above are defined as follows: | | |
| | - The *reference duration* corresponding to a channel occupancy initiated by the gNB including transmission of PDSCH(s) is defined in this clause as a duration starting from the beginning of the channel occupancy until the end of the first slot where at least one unicast PDSCH is transmitted over all the resources allocated for the PDSCH, or until the end of the first transmission burst by the gNB that contains unicast PDSCH(s) transmitted over all the resources allocated for the PDSCH, whichever occurs earlier. If the channel occupancy includes a unicast PDSCH, but it does not include any unicast PDSCH transmitted over all the resources allocated for that PDSCH, then, the duration of the first transmission burst by the gNB within the channel occupancy that contains unicast PDSCH(s) is the *reference duration* for CWS adjustment. | |
| | - *T_{w}* = max(*T_{A}*, *T_{B}* + 1*ms*) where *T_{B}* is the duration of the transmission burst from start of the *reference duration* in ms and *T_{A} =* 5*ms* if the absence of any other technology sharing the channel can not be guaranteed on a long-term basis (e.g. by level of regulation), and *T_{A}* = 10*ms* otherwise. | |
| If a gNB transmits transmissions using Type 1 channel access procedures associated with the channel access priority class p on a channel and the transmissions are not associated with explicit HARQ-ACK feedbacks by the corresponding UE(s), the gNB adjusts *CWₚ* before step 1 in the procedures described in subclase 4.1.1, using the latest *CWₚ* used for any DL transmissions on the channel using Type 1 channel access procedures associated with the channel access priority class p. If the corresponding channel access priority class *p* has not been used for any DL transmissions on the channel, *CWₚ = CW_{min, p}* is used. | | |

**[Table 12]**

| | |
|---|---|
| A UE may transmit the transmission using Type 1 channel access procedure after first sensing the channel to be idle during the slot durations of a defer duration *T_{d}*, and after the counter *N* is zero in step 4. The counter *N* is adjusted by sensing the channel for additional slot duration(s) according to the steps described below. | |
| | 1) set *N = Nᵢₙᵢₜ,* where *Nᵢₙᵢₜ* is a random number uniformly distributed between 0 and *CWₚ,* and go to step 4; |
| | 2) if *N* > 0 and the UE chooses to decrement the counter, set *N = N -* 1; |
| | 3) sense the channel for an additional slot duration, and if the additional slot duration is idle, go to step 4; else, go to step 5; |
| | 4) if *N* = 0, stop; else, go to step 2. |
| | 5) sense the channel until either a busy slot is detected within an additional defer duration *T_{d}* or all the slots of the additional defer duration *T_{d}* are detected to be idle; |
| | 6) if the channel is sensed to be idle during all the slot durations of the additional defer duration *T_{d}*, go to step 4; else, go to step 5; |
| If a UE has not transmitted a UL transmission on a channel on which UL transmission(s) are performed after step 4 in the procedure above, the UE may transmit a transmission on the channel, if the channel is sensed to be idle at least in a sensing slot duration *Tₛₗ* when the UE is ready to transmit the transmission and if the channel has been sensed to be idle during all the slot durations of a defer duration *T_{d}* immediately before the transmission. If the channel has not been sensed to be idle in a sensing slot duration *Tₛₗ* when the UE first senses the channel after it is ready to transmit, or if the channel has not been sensed to be idle during any of the sensing slot durations of a defer duration *T_{d}* immediately before the intended transmission, the UE proceeds to step 1 after sensing the channel to be idle during the slot durations of a defer duration *T_{d}*. | |
| The defer duration *T_{d}* consists of duration *T_{f} =* 16*us* immediately followed by *mₚ* consecutive slot durations where each slot duration is *Tₛₗ* = 9*us*, and *T_{f}* includes an idle slot duration *Tₛₗ* at start of *T_{f}.* | |

**[Table 13]**

| | | |
|---|---|---|
| If a UE transmits transmissions using Type 1 channel access procedures that are associated with channel access priority class p on a channel, the UE maintains the contention window value *CWₚ* and adjusts *CWₚ* for those transmissions before step 1 of the procedure described in clause 4.2.1.1, using the following steps: | | |
| | 1) For every priority class *p* ∈ {1,2,3,4}, set *CWₚ = CW_{min, p}*; | |
| | 2) If HARQ-ACK feedback is available after the last update of *CWₚ,* go to step 3. Otherwise, if the UE transmission after procedure described in clause 4.2.1.1 does not include a retransmission or is transmitted within a duration *T_{w}* from the end of the *reference duration* corresponding to the earliest UL channel occupancy after the last update of *CWₚ,* go to step 5; otherwise go to step 4. | |
| | 3) The HARQ-ACK feedback(s) corresponding to PUSCH(s) in the *reference duration* for the latest UL channel occupancy for which HARQ-ACK feedback is available is used as follows: | |
| | | a. If at least one HARQ-ACK feedback is 'ACK' for PUSCH(s) with transport block (TB) based feedback or at least 10% of HARQ-ACK feedbacks are 'ACK' for PUSCH CBGs transmitted at least partially on the channel with code block group (CBG) based feedback, go to step 1; otherwise go to step 4. |
| | 4) Increase *CWₚ* for every priority class *p* ∈ {1,2,3,4} to the next higher allowed value; | |
| | 5) For every priority class *p* ∈ {1,2,3,4}, maintain *CWₚ* as it is; go to step 2. | |
| The HARQ-ACK feedback, *reference duration* and duration *T_{w}* in the procedure above are defined as the following: | | |
| | - | For the purpose of contention window adjustment in this clause, HARQ-ACK feedback for PUSCH(s) transmissions are expected to be provided to UE(s) explicitly or implicitly where explicit HARQ-ACK is determined based on the valid HARQ-ACK feedback in a corresponding CG-DFI as described in clause 10.5 in [7], and implicit HARQ-ACK feedback is determined based on the indication for a new transmission or retransmission in the DCI scheduling PUSCH(s) as follows: |
| | | - If a new transmission is indicated, 'ACK' is assumed for the transport blocks or code block groups in the corresponding PUSCH(s) for the TB-based and CBG-based transmission, respectively. |
| | | - If a retransmission is indicated for TB-based transmissions, 'NACK' is assumed for the transport blocks in the corresponding PUSCH(s). |
| | | - If a retransmission is indicated for CBG-based transmissions, if a bit value in the code block group transmission information (CBGTI) field is '0' or '1' as described in clause 5.1.7.2 in [8], 'ACK' or 'NACK' is assumed for the corresponding CBG in the corresponding PUSCH(s), respectively. |
| | - The *reference duration* corresponding to a channel occupancy initiated by the UE including transmission of PUSCH(s) is defined in this clause as a duration starting from the beginning of the channel occupancy until the end of the first slot where at least one PUSCH is transmitted over all the resources allocated for the PUSCH, or until the end of the first transmission burst by the UE that contains PUSCH(s) transmitted over all the resources allocated for the PUSCH, whichever occurs earlier. If the channel occupancy includes a PUSCH, but it does not include any PUSCH transmitted over all the resources allocated for that PUSCH, then, the duration of the first transmission burst by the UE within the channel occupancy that contains PUSCH(s) is the *reference duration* for CWS adjustment. | |
| | - *T_{w}* = max(*T_{A}*, *T_{B}* + 1*ms*) where *T_{B}* is the duration of the transmission burst from start of the *reference duration* in ms and *T_{A} =* 5*ms* if the absence of any other technology sharing the channel cannot be guaranteed on a long-term basis (e.g. by level of regulation), and *T_{A}* = 10*ms* otherwise. | |

On the other hand, within the channel occupancy time (COT), the simplified channel access type 2 can be used before transmission, and the procedure as shown in Table 14 for DL transmission and Table 15 for UL transmission is performed.

**[Table 14]**

| | | |
|---|---|---|
| 4.1.2 | | Type 2 DL channel access procedures |
| This clause describes channel access procedures to be performed by an eNB/gNB where the time duration spanned by sensing slots that are sensed to be idle before a downlink transmission(s) is deterministic. If an eNB performs Type 2 DL channel access procedures, it follows the procedures described in clause 4.1.2.1. | | |
| Type 2A channel access procedures as described in clause 4.1.2.1 are only applicable to the following transmission(s) performed by an eNB/gNB: | | |
| | - Transmission(s) initiated by an eNB including discovery burst and not including PDSCH where the transmission(s) duration is at most 1*ms*, or | |
| | - Transmission(s) initiated by a gNB with only discovery burst or with discovery burst multiplexed with non-unicast information, where the transmission(s) duration is at most 1*ms,* and the discovery burst duty cycle is at most 1/20, or | |
| | - Transmission(s) by an eNB/ gNB following transmission(s) by a UE after a gap of 25*us* in a shared channel occupancy as described in clause 4.1.3. | |
| Type 2B or Type 2C DL channel access procedures as described in clause 4.1.2.2 and 4.1.2.3, respectively, are applicable to the transmission(s) performed by a gNB following transmission(s) by a UE after a gap of 16*us* or up to 16us, respectively, in a shared channel occupancy as described in clause 4.1.3. | | |
| 4.1.2.1 | | Type 2A DL channel access procedures |
| An eNB/gNB may transmit a DL transmission immediately after sensing the channel to be idle for at least a sensing interval *T_{short_dl}* = 25*us. T_{short_dl}* consists of a duration *T_{f} =* 16us immediately followed by one sensing slot and *T_{f}* includes a sensing slot at start of *T_{f}.* The channel is considered to be idle for *T_{short_dl}* if both sensing slots of *T_{short_dl}* are sensed to be idle. | | |
| 4.1.2.2 | | Type 2B DL channel access procedures |
| A gNB may transmit a DL transmission immediately after sensing the channel to be idle within a duration of *T_{f} =* 16*us. T_{f}* includes a sensing slot that occurs within the last 9us of *T_{f}.* The channel is considered to be idle within the duration *T_{f}* if the channel is sensed to be idle for a total of at least 5*us* with at least 4us of sensing occurring in the sensing slot. | | |
| 4.1.2.3 | | Type 2C DL channel access procedures |
| When a gNB follows the procedures in this clause for transmission of a DL transmission, the gNB does not sense the channel before transmission of the DL transmission. The duration of the corresponding DL transmission is at most 584us. | | |

**[Table 15]**

| | |
|---|---|
| 4.2.1.2 | Type 2 UL channel access procedure |
| This clause describes channel access procedures by UE where the time duration spanned by the sensing slots that are sensed to be idle before a UL transmission(s) is deterministic. | |
| If a UE is indicated by an eNB to perform Type 2 UL channel access procedures, the UE follows the procedures described in clause 4.2.1.2.1. | |
| 4.2.1.2.1 | Type 2A UL channel access procedure |
| If a UE is indicated to perform Type 2A UL channel access procedures, the UE uses Type 2A UL channel access procedures for a UL transmission. The UE may transmit the transmission immediately after sensing the channel to be idle for at least a sensing interval *T*_{short_ul} = 25*us*. *T*_{short_ul} consists of a duration *T_{f} =* 16usimmediately followed by one sensing slot and *T_{f}* includes a sensing slot at start of *T_{f}.* The channel is considered to be idle for *T*_{short_ul} if both sensing slots of *T*_{short_ul}.are sensed to be idle. | |
| 4.2.1.2.2 | Type 2B UL channel access procedure |
| If a UE is indicated to perform Type 2B UL channel access procedures, the UE uses Type 2B UL channel access procedure for a UL transmission. The UE may transmit the transmission immediately after sensing the channel to be idle within a duration of *T_{f} =* 16*us. T_{f}* includes a sensing slot that occurs within the last 9*us* of *T_{f}.* The channel is considered to be idle within the duration *T_{f}* if the channel is sensed to be idle for total of at least 5*us* with at least 4us of sensing occurring in the sensing slot. | |
| 4.2.1.2.3 | Type 2C UL channel access procedure |
| If a UE is indicated to perform Type 2C UL channel access procedures for a UL transmission, the UE does not sense the channel before the transmission. The duration of the corresponding UL transmission is at most 584us. | |

According to one embodiment of the present disclosure, a type 2A SL channel access may be in the same manner as a type 2A DL and/or UL channel access, with a sensing interval of T_short_sl=25us and a T_f=16us interval immediately following the sensing interval comprised of one sensing slot, where T_f comprises a sensing slot at the beginning. As for the basic idle determination, the scheme of DL or UL may also be used.

According to one embodiment of the present disclosure, a Type 2B SL channel access may be in the same manner as a Type 2B DL and/or UL channel access, with a sensing interval of T_f =16us, where T_f includes a sensing slot at the end of the 9us interval. As for the basic idle determination, the DL or UL scheme may also be used.

According to one embodiment of the present disclosure, a Type 2C SL channel access may be in the same manner as a Type 2C DL and/or UL channel access, such that no channel sensing is performed. Instead, the time interval of the SL transmission may be up to 584us.

According to one embodiment of the present disclosure, a type 1 SL channel access is performed in the same manner as a type 1 DL and/or UL channel access, wherein: i) a random integer value N is derived based on a contention window size corresponding to the priority class, ii) if the channel sensing result for a defer duration of size T_d corresponding to the priority class is an idle, the counter value is decremented to N-1 with T_sl as the unit when it is idle; and iii) if the counter value is zero, the UE may occupy the RB set or channel subject to channel sensing.

However, if some of the channel sensing results for the above T_sl interval are determined to be idle, the counter value may be maintained and channel sensing may be continued until the channel sensing results in the unit of the defer duration of size T_d again become idle. In the above, the defer duration of length T_d may be in the form of m_p consecutive T_sl after T_f=16us, where m_p is a value determined according to the priority class p, and may be a time interval in which channel sensing is performed with T sl=9us.

According to one embodiment of the present disclosure, when a UE has occupied a channel via a Type 1 SL channel access and the UE is not ready to transmit a sidelink transmission, the UE may configure a defer duration of length T_d and a sensing interval of length T_sl immediately preceding the ready-to-transmit sidelink transmission, and if both are idle, the UE may immediately perform the sidelink transmission. Here, if any of them are busy, the UE may perform the type 1 SL channel access again.

For example, if a sidelink transmission is difficult at the end of the channel sensing (e.g., if the end of the channel sensing is after the start of the sidelink transmission), the UE may reselect the sidelink transmission resource.

On the other hand, if two UEs that start transmission at the same time do not recognize each other's transmission and the channel sensing results of both UEs are determined to be IDLE, a collision between the two transmissions may occur.

On the other hand, when the start time point is randomly adjusted through cyclic prefix extension (CPE) and/or puncturing of a single or multiple start symbols, some of the sensing results for each transmission may be judged as BUSY during channel sensing for each transmission, which may cause a problem where FDM between different resources within the same RB set cannot be supported.

Meanwhile, in the case of inter-UE communication (e.g., sidelink) mode 2 resource (re)selection, the problem of transmission resources for different transmissions overlapping with each other is avoided or mitigated by allowing the previous transmission to indicate this through reserved resources.

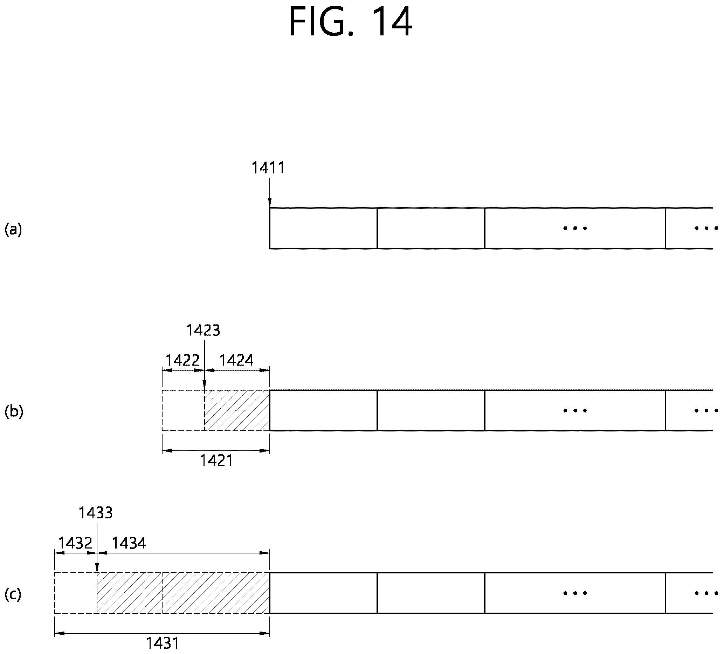

FIG. 14 shows applying CPE to the first symbol of the transmission resource according to an embodiment of the present disclosure. The embodiment of FIG. 14 may be combined with various embodiments of the present disclosure.

Referring to FIG. 14, a transmission resource to which CPE is not applied, a transmission resource to which CPE is applied within a range of one symbol, and a transmission resource to which CPE is applied within a range of two symbols are shown. In FIG. 14, each rectangle with a solid border may represent a transmission resource in symbol units.

Referring to (a) in FIG. 14, a transmission resource to which CPE is not applied is shown. For example, 1411 may refer to the start time point of the transmission resource.

Referring to (b) in Fig. 14, a transmission resource to which CPE is applied within the range of one symbol is shown. For example, 1421 may represent the duration of one symbol. For example, 1422 may refer to the duration from the time point one symbol prior to the start time point of the transmission resource to the start time point 1423 of the CPE duration (1424). For example, 1422 may refer to a delta value (e.g., i). For example, due to the applied CPE, the actual transmission may start from the time point of 1423.

Referring to (c) in Fig. 14, a transmission resource to which CPE is applied within a range of two symbols is shown. For example, 1431 may represent a duration of two symbols. For example, 1432 may refer to the duration from a time point two symbols prior to the start time point of the transmission resource to the start time point 1433 of the CPE duration (1434). For example, 1432 may refer to a delta value (e.g., i). For example, due to the applied CPE, the actual transmission may start from the time point of 1433.

According to an embodiment of the present disclosure, when a UE selects a resource of a reserved resource slot of another UE when (re)selecting a resource, and/or when a UE selects a transmission resource such that it is FDM with a resource of a reserved resource slot of another UE when (re)selecting a resource, a default CPE may be used.

For example, if a UE recognizes a reserved resource of another UE on the same slot as the already selected resource or on a resource overlapping or adjacent to the already selected resource in the frequency domain through resource re-evaluation or continuous sensing, the UE may use the default CPE.

For example, whether or not to use the default CPE may be determined based on the RSRP measurement value, transmission SL priority, and/or reception SL priority value.

For example, multiple CPE mechanisms may be used when a UE determines a resource conflict. For example, a resource conflict may be determined based on whether transmission resources/reservation resources with different time frequencies overlap, RSRP measurement values, transmission power values, transmission priority values, reception priority values, and/or transmission/reception CAPC values.

For example, a resource collision may include cases where time-frequency resources overlap between different transmission resources/reservation resources; where the RSRP measurement value for a reception resource is equal to or greater than a ((pre)configured or predefined) threshold; where the transmit power value is equal to or less than a ((pre)configured or predefined) threshold; where the transmission priority value is equal to or less than or less than a ((pre)configured or predefined) threshold; where the reception priority value is equal to or less than or less than a ((pre)configured or predefined) threshold; and/or where the transmission priority value is greater than the reception priority value. For example, the threshold value may be different per transmission priority, transmission CAPC, reception priority, and/or CAPC. And/or, for example, the threshold values may be (pre)configured.

According to an embodiment of the present disclosure, determining, by a UE, whether frequency division multiplexing (FDM) occurs with reservation resources of another UE, derived based on transmission of channels/signals (e.g., SL) and control information (e.g., SCI) on inter-UE communication or reception of UE coordination information, may be determined based on an RSRP measurement value for the reservation resources, a representative SL reception priority value or CAPC value for the reservation resources, a representative SL transmission priority value or CAPC value for transmission of the UE's inter-UE communication channel/signal, a congestion control level, and/or CR/CBR, etc.

For example, determining, by a UE, whether reservation resources of another UE exist within the same slot and/or the same RB set, based on transmission of channels/signals (e.g., SL), control information (e.g., SCI) on inter-UE communication, or reception of UE coordination information, may be determined based on an RSRP measurement value for the reservation resources, a representative SL reception priority value or CAPC value for the reservation resources, a representative SL transmission priority value or CAPC value, a congestion control level, and/or CR/CBR, etc. for transmission of the UE's inter-UE communication channel/signal.

For example, determining, by the UE, whether FDM occurs with reservation resources of another UE, derived based on transmission of channels/signals (e.g., SL), and reception of control information (e.g., SCI) on inter-UE communication, and/or determining whether reservation resources of another UE exist within the same slot and/or the same RB set, may be limited to cases where an RSRP measurement value for the reservation resources is equal to or greater than or greater than a first threshold value, where an RSRP measurement value for the reservation resources is equal to or less than or less than a second threshold value, where an SL transmission priority value is greater than and/or equal to an SL reception priority value for the reservation resources, and/or where the SL reception priority value for the reservation resources is equal to or less than or less than the second threshold value.

For example, the first threshold may be a value (pre)configured per resource pool, SL transmission priority, SL reception priority, and/or congestion control level, and/or a value derived from the above values (through boosting, etc.).

For example, the second threshold value may be a (pre)configured value for each resource pool and/or congestion control level.

For example, not determining, or ignoring, whether FDM occurs with reservation resources of another UE derived based on transmission of channels/signals (e.g., SL), and reception of control information (e.g., SCI) on inter-UE communication, and/or whether reservation resources of another UE exist within the same slot and/or the same RB set, by the UE, may be limited to cases where an RSRP measurement value for the reservation resources is equal to or less than or less than a first threshold value, where the RSRP measurement value is equal to or greater than or greater than a second threshold value, where an SL transmission priority value is less than and/or equal to an SL reception priority value for the reservation resources, and/or where the SL transmission priority value is equal to or less than or less than the second threshold value.

Meanwhile, when a UE performs resource (re)selection and/or resource re-evaluation, a plurality of reserved resources may exist/be recognized within the transmission (scheduled) resource slot, and each may have a different CPE start position. For example, the UE may avoid slots in which transmission resources and the other reserved resources exist through resource (re)selection.

For example, a UE may determine the CPE start position for the transmission resource based on the earliest or latest value among the CPE start position values for a plurality of reserved resources in the target slot.

For example, the UE may determine a specific value among CPE start position values for a plurality of reservation resources within a target slot as a CPE start position for a transmission resource, based on the UE's transmission priority value or CAPC value, and/or reception priority value or CAPC value for the reservation resources, and/or CPE start position for the reservation resources. For example, the UE may determine or configure, as the CPE start position, a temporally earlier time point among the CPE start position(s) of the reservation resource(s) corresponding to a reception priority value that are greater than or equal to the transmission priority value.

Meanwhile, a CPE start position may be (pre)configured in a plurality per transmission priority value and/or transmission CAPC value, and a UE may randomly select the final CPE start position from a candidate group according to each priority or CAPC. For example, within the CPE start position candidate group according to the above priority or CAPC, some or all of the CPE start position values being the same may be allowed.

For example, the CPE start position candidate group for a low priority (high priority value) may be a superset of the CP start position candidate group for a high priority (low priority value). For example, in the above case, the CPE start position value that comprises the CPE start position candidate group with a high priority may be placed in a region that is relatively earlier in time.

For example, the CPE start position candidate group for low priority (high priority value) may be a subset of the CP start position candidate group for high priority (low priority value). For example, in the above case, a CPE start position value that constitutes the CPE start position candidate group that has low priority may be placed in a region that is relatively late in time. For example, CPE start position values being the same within the CPE start position candidates per priority or CAPC may not be allowed.

For example, when a UE performs resource (re)selection and/or performs resource re-evaluation, i) if an inter-UE transmission on a (scheduled) transmission resource (e.g., SL transmission) may cause inter-UE blocking for an inter-UE transmission having a transmission priority value less than and/or equal to the priority value of the UE's inter-UE transmission, and/or ii) if a CPE start position of the UE's inter-UE transmission precedes a CPE start position of another inter-UE transmission having a transmission priority value less than and/or equal to that of the UE's inter-UE transmission, the UE may reselect the (scheduled) transmission resource in a manner that avoids the resource of the slot to which the inter-UE transmission belongs.

For example, CPE targeting may be restricted when a transmission resource overlaps, in the time domain, with another reservation resource or selection resource due to the CPE for the transmission resource, or when a time interval (between transmission resources) is equal to or less than a certain time interval threshold value. For example, the time interval threshold value may be a channel sensing interval length that the UE actually performs or expects to perform. For example, confirmation of the overlap in the time domain or the time interval may be limited to cases where different resources/transmissions are included in the same RB set or overlap in the frequency domain.

Again, for example, confirmation of the overlap in the time domain or the time interval may be limited to cases where a Guard band is configured for the resource pool or carrier. For example, if a guard band is not configured, confirmation of the overlap in the time domain or the time interval may be extended and applied even across different RB sets.

For example, at least the different RB sets may be limited to be within a (transmission) resource pool of the UE, a BWP (e.g., SL BWP) of inter-UE communication, or a carrier (e.g., SL carrier) of inter-UE communication.

For example, a UE may perform resource (re)selection such that a transmission resource and/or a CPE duration for a transmission resource does not overlap with another reservation resource or a pre-selected resource. When selecting a transmission resource, a UE may perform resource (re)selection such that another reservation resource or pre-selected resource and/or a CPE duration for the reservation or selected resource does not overlap with the transmission resource.

For example, not overlapping mentioned above may include overlapping or not overlapping within the same RB set, and/or overlapping in time within the same slot and/or the same symbol.

For example, the description for the RB set may be applied only in cases where a guard band is configured for a carrier (e.g., SL carrier), a BWP (e.g., SL BWP) of inter-UE communication, and/or a resource pool, and/or if a guard band is not configured, whether overlap occurs may be determined based on whether there is an overlap in the time domain regardless of whether overlap occurs in the frequency domain.

For example, in situations where frequency reuse is allowed, a UE may expect that EDT and/or an (initial) RSRP threshold value is (pre)configured or used such that inter-UE blocking does not occur. For example, an (initial) SL RSRP threshold value (list), delta value, and/or EDT value may be configured/used such that the following condition is satisfied: (initial) SL RSRP threshold value (list) + 10log10(RB set size (e.g., # of PRBs)) + 10log10(channel sensing duration) + delta value < EDT. For example, the delta value may be 0, may be (pre)configured, and/or may be a predefined value.

For example, the CPE length for a UE's inter-UE communication channel transmission (e.g., SL channel transmission) may be relatively longer when using a Type 2 channel access procedure than when using a Type 1 channel access procedure. This may be intended to increase the priority of transmission within a COT duration.

For example, the above operation may only be applied in the case of equal priority or CAPC.

For example, the operation and/or CPE length may be different for different levels of congestion control.

For example, the above operation may be limited to cases where the congestion control level is higher than a specific threshold value (e.g., a (pre)configured, predefined, and/or a threshold value configured through PC5-RRC).

For example, depending on the above operation, the length of a CPE when an inter-UE channel transmission with a lower priority value (e.g., an SL channel transmission) uses a Type 1 channel access procedure may be shorter and/or equal to the length of a CPE when an inter-UE channel transmission with a higher priority value uses a Type 2 channel access procedure.

Alternatively, for example, according to the operation, the CPE length of an inter-UE channel transmission (e.g., SL channel transmission) with a higher priority value using a Type 2 channel access procedure may be shorter than and/or equal to the CPE length of an inter-UE channel transmission with a lower priority value using a Type 1 channel access procedure.

For example, the operation may be limited to being performed when a UE utilizes all PRBs in the RB set for inter-UE channel transmission (e.g., SL channel transmission). For example, the operation is, in the case of the same inter-UE(e.g., SL priority), a Tie-breaking, and according to a channel access type, the CPE length may be different (such that the CPE length of the type 2 channel access procedure are the same).

For example, a CPE length and/or a set of candidate values for the CPE length may be (pre)configured per BWP of inter-UE communication (e.g., SL BWP), per resource pool, per RB set, per priority, per CAPC, per channel access type, per transmission order or first transmission or middle transmission or last transmission of multiple consecutive slot transmissions (e.g., MCSt), and/or per whether the transmission is inside or outside a COT.

For example, i) if a UE uses all PRBs within an RB set as a transmission resource for (a single channel transmission on inter-UE) (e.g., for a single PSCCH/PSSCH), ii) if the inter-UE single channel transmission (e.g., PSCCH/PSSCH transmission) satisfies COT conditions within a COT duration and utilizes the COT, and/or iii) if the inter-UE single channel transmission is the first transmission of multiple consecutive slot transmissions (e.g., MCSt) and/or the first transmission of an inter-UE transmission burst (e.g., SL transmission burst), the UE may select a CPE value from among multiple CPE candidate values for the inter-UE single channel transmission according to a specific criterion (e.g., priority, CAPC, and/or random selection). For example, being the first transmission of the multiple consecutive slot transmissions or the inter-UE transmission burst may refer to the first transmission in terms of actual selected/reserved resources, and/or a transmission attempted at the current time after a previous transmission was not performed due to LBT failure or priority procedures.

For example, i) if a UE uses a subset of PRBs within an RB set as a transmission resource for (a single channel transmission on inter-UE) (e.g., for a single PSCCH/PSSCH), ii) if the inter-UE single channel transmission (e.g., PSCCH/PSSCH transmission) satisfies COT conditions within a COT duration and utilizes the COT, and/or iii) if the inter-UE single channel transmission is the first transmission of multiple consecutive slot transmissions (e.g., MCSt) and/or the first transmission of an inter-UE transmission burst (e.g., SL transmission burst), the UE may select a CPE value from among multiple CPE candidate values for the inter-UE single channel transmission according to a specific criterion (e.g., priority, CAPC, and/or random selection). For example, being the first transmission of the multiple consecutive slot transmissions or the inter-UE transmission burst may refer to the first transmission in terms of actual selected/reserved resources, and/or a transmission attempted at the current time after a previous transmission was not performed due to LBT failure or priority procedures.

For example, i) if a UE uses all PRBs within an RB set as a transmission resource for (a single channel transmission on inter-UE) (e.g., for a single PSCCH/PSSCH), ii) if the inter-UE single channel transmission (e.g., PSCCH/PSSCH transmission) satisfies COT conditions within a COT duration and utilizes the COT, and/or iii) if the inter-UE single channel transmission is a middle transmission of multiple consecutive slot transmissions (e.g., MCSt) and/or a middle transmission of an inter-UE transmission burst (e.g., SL transmission burst), the UE may use a single CPE value for the inter-UE single channel transmission. For example, the single CPE value may include a default CPE or a third CPE value (a value that results in a time gap from the symbol boundary being less than or equal to 16 usec).

Being the middle transmission of the multiple consecutive slot transmissions or the inter-UE transmission burst may include a case where there exists an inter-UE channel (e.g., an SL channel) on which an actual transmission has been performed prior to the current time.

For example, if a UE detects an inter-UE transmission burst (e.g., an SL transmission burst) of another UE, i) if the UE's transmission occurs in the middle and end slots of the inter-UE transmission burst, and/or ii) if the RB set(s) of the inter-UE transmission burst and the RB set(s) of the UE's transmission wholly or partially overlap, the UE may use, as the CPE value applied to its transmission, the CPE value used in the middle of the inter-UE transmission burst (e.g., a CPE starting position that results in a time difference of 16 usec or less).

For example, i) if a UE transmits a first inter-UE channel (e.g., a first SL channel) on a first RB set(s) in a first slot, ii) if the UE transmits a second inter-UE channel (e.g., a second SL channel) on a second RB set(s) that wholly or partially overlap with the first RB set(s) in the slot immediately following the first slot, iii) if a time difference (before applying CPE) between the first inter-UE channel transmission (e.g., the first SL channel transmission) and the second inter-UE channel transmission (e.g., the second SL channel transmission) is within one or two symbols, iv) and/or if a CAPC value for the second inter-UE channel (e.g., the second SL channel) is less than or equal to the CAPC value referred to for channel access for the UE's first inter-UE channel (e.g., the first SL channel), and/or v) if a power value for the second inter-UE channel (e.g., the second SL channel) is less than or equal to the maximum power value corresponding to the EDT value used for channel access for the UE's first inter-UE channel (e.g., the first SL channel), the UE may select and/or use, for the second inter-UE channel transmission (e.g., the second SL channel transmission), a CPE starting position that satisfies a time gap of 16 usec or less or less than 16 usec from the first inter-UE channel transmission (e.g., the first SL channel transmission).

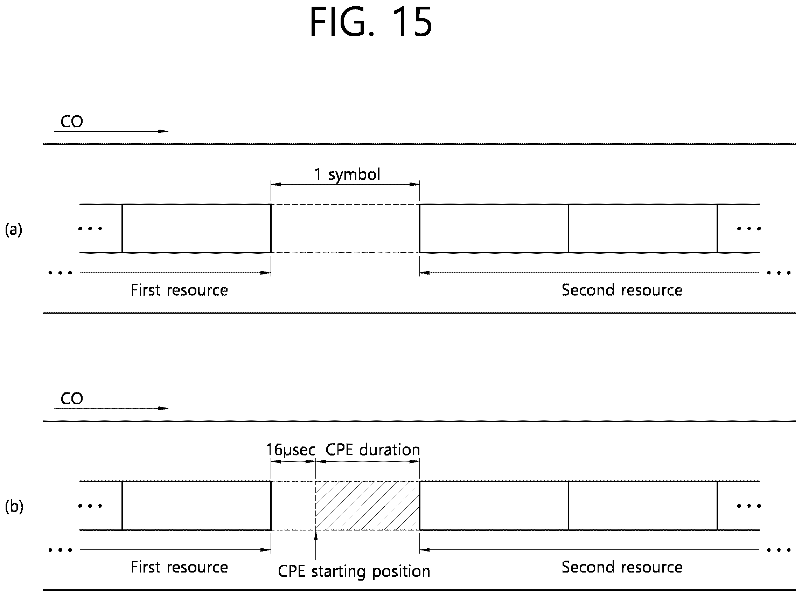

FIG. 15 shows a method of applying CPE when there is a 1-symbol interval between two transmission resources within a COT, according to an embodiment of the present disclosure. The embodiment of FIG. 15 may be combined with various embodiments of the present disclosure.

In FIG. 15, each of the squares with solid borders may represent a transmission resource in symbol units.

Referring to (a) of FIG. 15, a first resource and a second resource within the CO shared by a transmitting UE are shown. For example, it is assumed that there is a gap of one symbol between the first resource and the second resource.

Here, for example, if the transmission based on the first resource is successfully performed, the interval between the first resource and the second resource within the COT may be required to be less than or equal to 16 usec in order for the transmission based on the second resource to be performed without performing channel sensing related to the channel access procedure. However, since one symbol is longer than 16 usec, in this embodiment, a method is proposed such that the transmission based on the second resource is performed without channel sensing related to the channel access procedure by applying CPE to the second resource.

According to this embodiment, a transmission UE, in FIG. 15(b), may determine the duration of the CPE such that the actual interval between the first resource and the second resource, where the transmission is actually performed, becomes exactly 16 usec by applying CPE. That is, the transmission UE may determine a delta value (e.g., i) to be 16 usec such that the CPE starting position becomes a time point 16 usec after the starting point of the interval between the first resource and the second resource.

According to this embodiment, even though the interval between the first resource and the second resource is one symbol, which is greater than 16 usec, the starting point of the actual transmission based on the second resource satisfies the condition of being 16 usec or less from the first resource by applying CPE, so that, in case the transmission based on the first resource is successful (i.e., for example, when the result of channel sensing related to the channel access procedure for the first transmission resource is idle), the transmission based on the second resource may be performed without a channel sensing operation related to the channel access procedure.

For example, here, the CPE duration may be less than 1 symbol.

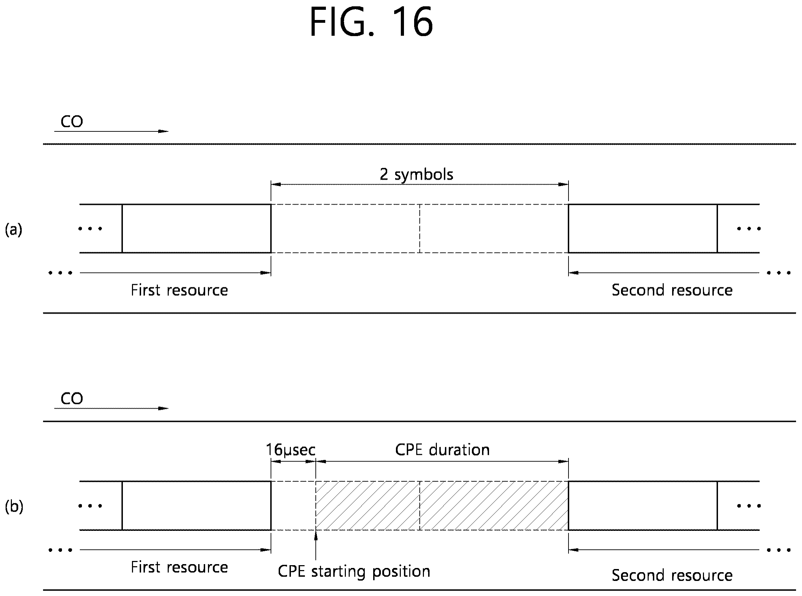

FIG. 16 shows a method of applying a CPE when there is a gap of two symbols between two transmission resources within a CO, according to one embodiment of the present disclosure. The embodiment of FIG. 16 may be combined with various other embodiments according to the present disclosure.

In FIG. 16, each of the squares with solid borders may represent a transmission resource in symbol units.

Referring to (a) of FIG. 16, a first resource and a second resource within the CO shared by a transmitting UE are shown. For example, it is assumed that there is a gap of 2 symbols between the first resource and the second resource.

Here, for example, if the transmission based on the first resource is successfully performed, the interval between the first resource and the second resource within the COT may be required to be 16 usec or less in order for the transmission based on the second resource to be performed without performing channel sensing related to the channel access procedure. However, since two symbols are greater than 16 usec, in this embodiment, a method is proposed such that the transmission based on the second resource is performed without channel sensing related to the channel access procedure by applying CPE to the second resource.

According to this embodiment, a transmission UE, in FIG. 16(b), may determine the duration of the CPE such that the actual interval between the first resource and the second resource, where the transmission is actually performed, becomes exactly 16 usec by applying CPE. That is, the transmission UE may determine a delta value (e.g., i) to be 16 usec such that the CPE starting position becomes a time point 16 usec after the starting point of the interval between the first resource and the second resource.

According to this embodiment, even though the interval between the first resource and the second resource is two symbols, which is greater than 16 usec, the starting time point of the actual transmission based on the second resource satisfies the condition of being 16 usec or less from the first resource by applying CPE, so that, in case the transmission based on the first resource is successful (i.e., for example, when the result of channel sensing related to the channel access procedure for the first transmission resource is idle), the transmission based on the second resource may be performed without a channel sensing operation related to the channel access procedure.

For example, here, the CPE duration may be greater than 1 symbol.

According to an embodiment of the present disclosure, if a UE determines that the second inter-UE channel transmission (e.g., the second SL channel transmission) does not match the parameter value used during the channel access procedure for the transmission of the UE's first inter-UE channel (e.g., the first SL channel), the UE may not apply CPE, may select/apply CPE based on a procedure of selecting a single CPE value from multiple CPE starting positions, and/or may apply a default CPE.

For example, a case in which the second inter-UE channel transmission (e.g., the second SL channel transmission) does not match the parameter value used during the channel access procedure for the transmission of the UE's first inter-UE channel (e.g., the first SL channel) may include cases where the second inter-UE channel (e.g., the second SL channel) is not included in the RB set(s) for the channel access procedure, the CAPC value is greater, the power value is greater, and/or the time difference (before applying CPE) exceeds one or two symbols.

According to one embodiment of the present disclosure, the second inter-UE channel (e.g., the second SL channel) may be limited to PSCCH/PSSCH.

For example, if a UE succeeds in a channel access, performs a first inter-UE channel transmission (e.g., a first sidelink channel transmission), stops the transmission, and then resumes a second inter-UE channel transmission (e.g., a second sidelink channel transmission) in the channel occupancy (CO) for the channel access, the CPE starting position may be determined by selecting a CPE value from among candidate CPE starting positions for the inside of the COT.

For example, the method described above may be limited to being applied when a UE indicates COT sharing to another UE through a first inter-UE channel transmission (e.g., a first sidelink channel transmission), and/or when the UE recognizes or detects a transmission of a COT response UE before a second inter-UE channel transmission (e.g., a second sidelink channel transmission).

For example, if a UE succeeds in a channel access, performs a first inter-UE channel transmission (e.g., a first sidelink channel transmission), stops the transmission, and then resumes a second inter-UE channel transmission (e.g., a second sidelink channel transmission) in the CO for the channel access, the CPE starting position may be determined by applying a default CPE or by not applying a CPE.

For example, the method described above may be limited to being applied when the UE does not indicate COT sharing to another UE through a first inter-UE channel transmission (e.g., a first sidelink channel transmission), and/or when the UE does not recognize or detect a transmission of a COT response UE before a second inter-UE channel transmission (e.g., a second sidelink channel transmission).

Meanwhile, a UE may adopt a method of changing the CPE based on the result of channel sensing for the channel access procedure (e.g., LBT). However, in this case, the channel sensing duration may partially overlap depending on each starting position, which may make alignment between channel sensing slots difficult. In such a case, the implementation complexity of channel sensing may increase.

For example, when a UE performs a Type 1 channel access procedure and fails in channel access until a (resource) starting position based on a first CPE, the UE may perform the Type 1 channel access procedure until a (resource) starting position based on a second CPE. And/or, for example, a (time) difference between the (resource) starting position based on the first CPE and the (resource) starting position based on the second CPE may be equal to or greater than the channel sensing slot duration and/or the (self-)defer duration and/or the sum of the values.

For example, when a UE performs a Type 2 channel access procedure and fails in channel access until a (resource) starting position based on a first CPE, the UE may perform the Type 2 channel access procedure until a (resource) starting position based on a second CPE. For example, in this case, a reception-to-transmission (RX-to-TX) switching time duration after a channel sensing operation for the first CPE and a channel sensing operation duration for the second CPE may not overlap, and a second CPE candidate may be restricted and/or the channel sensing operation duration may be adjusted by the UE for this.

For example, a UE may perform an additional sensing operation (for a 9 us channel sensing slot and/or a defer duration of T_d) immediately before a CPE starting position that comes a certain time after the time point at which a counter value becomes 0 according to a Type 1 channel access procedure. For example, the certain time may be determined depending on the implementation of the UE, (pre)configured, and/or predefined. That is, when the result of the channel sensing operation for the first CPE is not idle, the CPE starting position for a second CPE applied to the next attempted transmission may be the next earliest CPE starting position, which is (pre)configured, and/or, depending on a UE processing time budget and/or the implementation of the UE, a CPE starting position which is later than this may be selected.

For example, when a UE performs a Type 2 channel access procedure and fails in the channel access until the first CPE-based (resource) starting position, the UE may perform the Type 1 channel access procedure until the second CPE-based (resource) starting position. And/or, for example, a (time) difference between the first CPE-based (resource) starting position and the second CPE-based (resource) starting position may be equal to or greater than a channel sensing duration, a channel sensing interval, and/or a channel sensing slot for the UE's second CPE-based (resource) starting position.

Meanwhile, according to an embodiment of the present disclosure, a full RB allocation transmission based on Type 1 channel access and a full RB allocation transmission based on Type 2 channel access may overlap with each other. For example, a full RB set allocation of Type 2 may be the first transmission within a (shared) COT. For example, the full RB set allocation of Type 2 may be applied to the first transmission within a (shared) COT.

For example, when a UE receives/obtains shared COT information and/or when the COT usage condition is not met, the UE may use a default CPE for a transmission within the obtained COT region (in the frequency and/or time domain), even when attempting a transmission based on a Type 1 channel access procedure.

For example, CPE length values per priority may differ depending on whether they are for the inside or the outside of a COT. And/or, for example, CPE length values per priority may also differ depending on whether the COT is used (i.e., when the COT usage condition is satisfied) or not used. For example, for inter-UE transmission (e.g., SL transmission) with the same priority, the CPE length applied for the inside of the COT may be greater than or equal to the CPE length applied for the outside of the COT.

For example, a set of candidate CPE lengths may be (pre)configured per priority, per CAPC, per full RB allocation and partial RB allocation, per inside or outside of a COT, and/or per congestion control level. And/or, for example, the UE may randomly select a final CPE length to use from the candidate set based on information related to the transmission.

For example, for the partial resource block allocation of the UE, whether the UE uses the (pre)configured (default) CPE length and/or uses a scheme of selecting a specific CPE length from among a plurality of CPE candidates may be configured. For example, the (pre)configuration may be configured (to be different) per resource pool, per congestion control level, per priority, per CAPC, and/or depending on whether it is the first transmission in a multiple consecutive slot transmission (e.g., MCSt) or a subsequent transmission.

For example, at least for the first transmission in a multiple consecutive slot transmission (e.g., MCSt), in the case of the UE's partial RB allocation, a scheme of selecting a specific CPE length from among a plurality of CPE candidates may be used.

For example, whether full RB set allocation transmission and/or partial RB set allocation transmission is allowed per slot group may be (pre)configured. For example, the slot(s) and/or slot group(s) in which full RB set allocation transmission and/or partial RB set allocation transmission is allowed may be (pre)configured.

For example, in a slot where both full RB set allocation transmission and partial RB set allocation transmission are allowed, the same CPE selection scheme may be used for the two transmissions.

For example, in a slot where both full RB set allocation transmission and partial RB set allocation transmission are allowed, a (pre)configured (default) CPE length may be used for the two transmissions.

For example, in a slot where both full RB set allocation transmission and partial RB set allocation transmission are allowed, a scheme of selecting a specific CPE length from among multiple candidate CPE lengths may be used for the two transmissions.

For example, the two transmissions may be interpreted(limited) as the two transmissions that attempt transmission based on a type 1 channel access procedure.

For example, the two transmissions may each be interpreted(limited) as the first transmission in a multiple consecutive slot transmissions (e.g., MCSt).

In various embodiments of the present disclosure, full RB set allocation may mean a case where all PRBs in an RB set are used for transmission for all or some of the allocated RB sets.

In various embodiments of the present disclosure, partial RB set allocation may refer to a case where only some PRBs within an RB set are used for transmission for all or some of the allocated RB sets.

In various embodiments of the present disclosure, the (pre)configuration for partial RB set allocation may be performed per the number (range) of allocated PRBs within the RB set and/or the ratio (range) of the number of allocated PRBs to the total number of PRBs, and/or may differ accordingly.

According to an embodiment of the present disclosure, i) when a UE detects/recognizes a reserved resource of another UE in a slot scheduled for transmission, ii) when the RSRP measurement value for the reserved resource is greater than or equal to a (pre)configured threshold value, iii) when the priority value of the UE's transmission is less than or equal to or less than the priority value of the reserved resource, iv) when the priority value of the UE's transmission is greater than or equal to or exceeds the priority value of the reserved resource, and/or v) when the priority value of the reserved resource is less than or equal to or less than a (pre)configured threshold value, the CPE selection scheme may differ among these and other cases.

According to an embodiment of the present disclosure, when the UE detects/recognizes a reserved resource of another UE in a slot scheduled for transmission, and/or when an RSRP measurement value for the reserved resource is equal to or greater than a (pre)configured threshold value, the CPE selection scheme for such cases and for other cases may be separately (pre)configured.

According to an embodiment of the present disclosure, the scheme for determining/selecting a CPE may differ depending on: i) the form of the UE's transmission (full RB allocation or partial RB allocation), ii) the form of the transmission of a reserved resource detected by the UE (full RB allocation or partial RB allocation), iii) the channel access procedure at the time of the UE's transmission attempt (Type 1 channel access procedure or Type 2 channel access procedure), and/or iv) the channel access procedure of the reserved resource detected by the UE (Type 1 channel access procedure or Type 2 channel access procedure).

For example, if i) the transmission form of the UE is full RB allocation or partial RB allocation, ii) the resource form of the reserved resource detected by the UE is partial RB allocation, and/or iii) the channel access procedure of the reserved resource detected by the UE is type 2, the UE may use a (pre)configured (default) CPE length.

For example, if i) the transmission form of the UE is partial RB allocation or full RB allocation, ii) the resource form of the reserved resource detected by the UE is full RB allocation, and/or iii) the channel access procedure of the reserved resource detected by the UE is type 1, the UE may use a scheme of selecting a specific CPE length from among a set of candidate CPE lengths. For example, the specific CPE length may be the CPE length of the reserved resource.

In various embodiments of the present disclosure, a transmission using type 2 channel access may represent transmissions within a COT period, and/or a transmission using type 1 channel access may represent transmissions outside the COT or a transmission (performed) at COT initialization.

The various methods described in various embodiments of the present disclosure may be applied differently according to i) the CAPC value, ii) the inter-UE priority value (e.g., SL priority value), iii) the (remaining) counter value of the type 1 channel access procedure, and/or iv) the contention window size of the type 1 channel access procedure.

Various embodiments of the present disclosure may be applied differently depending on the inter-UE resource (e.g., SL resource) selection method and operation method (e.g., mode 1 operation or mode 2 operation), or on whether the UE is in coverage (INC) or out of coverage (OOC).

For example, when the UE operates with mode 1 resource allocation (RA), resource reservation information obtained by the UE may not exist, and/or the UE may use a single CPE starting position selection scheme (e.g., default CPE), and/or a multiple CPE starting position selection scheme (e.g., random selection scheme based on priority, CAPC value, and/or candidate values in units or the above), depending on the allocation form (e.g., partial RB set allocation or full RB set allocation) for the inter-UE physical shared channel (e.g., PSSCH).

Specifically, for example, when the allocation form is partial RB set allocation, the UE may use a single CPE starting position selection scheme (e.g., default CPE), and/or when the allocation form is full RB set allocation, the UE may use a multiple CPE starting position selection scheme (e.g., random selection scheme based on priority, CAPC value, and/or candidate values (pre)configured ins units of the above).

For example, when the UE operates with mode 2 resource allocation (RA), the CPE selection scheme may vary depending on the presence or absence of inter-UE (e.g., SL) reserved resources detected by the UE, the presence or absence of the UE's own reserved resources, the presence or absence of potential reserved resources corresponding to non-monitored slots, and/or the allocation form (e.g., partial RB set allocation or full RB set allocation) for the inter-UE physical shared channel (e.g., PSSCH).

For example, when there is no inter-UE (e.g., SL) reserved resource detected by the UE in the mode 2 resource allocation (RA), and when the resource allocation scheme is a partial RB set allocation, the UE may use a single CPE starting position selection scheme (e.g., a default CPE). For example, when there is no inter-UE (e.g., SL) reserved resource detected by the UE in the mode 2 resource allocation (RA), and when the resource allocation scheme is a partial RB set allocation and/or a full RB set allocation, the UE may use a multiple CPE starting position selection scheme (e.g., a scheme based on priority, CAPC value, and/or random selection scheme for the candidate values (pre)configured per units of the above).

For example, when there is an inter-UE (e.g., SL) reserved resource detected by the UE in the mode 2 resource allocation (RA), and when the resource allocation scheme is a partial RB set allocation and/or a full RB set allocation, the UE may use a single CPE starting position selection scheme (e.g., a default CPE).

For example, when there is an inter-UE (e.g., SL) reserved resource detected by the UE in the mode 2 resource allocation (RA), and when the resource allocation scheme is a full RB set allocation, the UE may use a multiple CPE starting position selection scheme (e.g., a scheme based on priority, CAPC value, and/or random selection scheme for the candidate values (pre)configured in units of the above).

For example, the CPE value may be the same for (reserved) resources indicated in the same TB, the same SL grant, and/or the same control information (e.g., SCI). For example, the CPE value may be selected using a scheme in which a single CPE is selected from multiple CPE candidates based on a (pre)configured default CPE value, CAPC or priority, or random selection (e.g., (pre)configured per CAPC or priority, resource pool, and/or RB set).

According to an embodiment of the present disclosure, the activation or deactivation of the scheme for determining a CPE starting position based on reserved resources may be (pre)configured per resource pool, per SL BWP, and/or per SL carrier.

According to an embodiment of the present disclosure, a UE that receives information indicating a CPE starting position for reserved resources may change the CPE starting position at the actual transmission time. For example, the CPE starting position that may be changed may be limited to being the same as and/or later than the indicated CPE starting position in time. For example, in the above, by way of exception, if the UE's transmission priority value is less than or equal to or less than a (pre)configured threshold value, the CPE starting position that may be changed being earlier than the indicated CPE starting position may be allowed. For example, depending on the constraint on the CPE starting position, the transmission of inter-UE (e.g., SL) information (e.g., logical channel (e.g., LCH) data) using the resource may be restricted based on a parameter corresponding to the CPE starting position (e.g., inter-UE (e.g., SL) priority value and/or CAPC value).

For example, a UE that receives information indicating a CPE starting position for reserved resources may not be allowed to change the CPE starting position at the actual transmission time. And/or, for example, the transmission of inter-UE (e.g., SL) information (e.g., logical channel (e.g., LCH) data) using the reserved resource may be restricted based on a parameter corresponding to the CPE starting position (e.g., inter-UE (e.g., SL) priority value and/or CAPC value).

For example, the UE may apply the CPE starting position for a reserved resource only to reserved resources within the same TB and/or within the same period, and/or only to all or a part (e.g., control information (e.g., SCI)) of the reserved resources in the immediately following period.

For example, in the case of inter-UE channel transmission (e.g., SL channel transmission) and/or initial transmission over a resource that has not previously been indicated as a reserved resource, the CPE starting position applied to the transmission may inherit the CPE value for the reserved resource (of another UE or the same UE) in the same slot.

For example, in the case of inter-UE channel transmission (e.g., SL channel transmission) and/or initial transmission over a resource that has not previously been indicated as a reserved resource, the UE may perform the corresponding transmission in a different slot through resource reselection or the like, if a reserved resource (of another UE or the same UE) exists in the same slot.

For example, in the case of inter-UE channel transmission (e.g., SL channel transmission) and/or retransmission based on a previously indicated reserved resource, the UE may use the (pre)configured default CPE as the CPE starting position applied to the transmission (if a reserved resource of another UE or the same UE exists in the same slot).

According to various embodiments of the present disclosure, in a scheme for determining the CPE for UE transmission by inheriting a CPE value of another (reserved) resource, when there are multiple such (reserved) resources, the CPE starting position in the scheme may be limited and applied as the earliest CPE starting position, the latest CPE starting position, the CPE starting position of the reserved resource having the lowest priority value, the CPE starting position of the reserved resource having the highest priority value, and/or the CPE starting position of a reserved resource having a priority value less than or equal to the priority value of the UE transmission.

The scheme according to various embodiments of the present disclosure may be applied differently per (or accordingly) inter-UE (e.g., SL) channel, and/or per inter-UE physical channel (e.g., PSCCH/PSSCH) transmission, and/or depending on whether the transmission is performed outside or inside a COT.

The scheme according to various embodiments of the present disclosure may be applied differently per subcarrier spacing (e.g., SCS), per RB set, and/or per RB set size.

Embodiments of the present disclosure may be different and/or (pre)configured per resource pool, and/or per transmission inside or outside the resource pool, and/or per QoS parameter, and/or per CAPC, and/or per SL priority, and/or per location inside or outside the COT (e.g., during COT initialization), and/or per transmission order within an MCSt, and/or per SL channel type, and/or per RB set, and/or per SL BWP, and/or per SL carrier, and/or per congestion control level, and/or per transmission operation or reception operation, and/or per transmission power level, and/or per transmission starting time point, and/or per channel access procedure type for the transmission, and/or per LBT failure rate, and/or per whether the UE is a COT initiator, a COT responded UE, or another type of UE, and/or per cast type, and/or per whether SL HARQ-ACK feedback is enabled, and/or per HARQ-ACK feedback option, and/or per number of transmission attempts for the same information or TB.

For example, in embodiments of the present disclosure, the (pre)configuration may be performed per resource pool, and/or per transmission inside or outside the resource pool, and/or per QoS parameter, and/or per CAPC, and/or per SL priority, and/or per location inside or outside the COT (e.g., during COT initialization), and/or per transmission order within an MCSt, and/or per SL channel type, and/or per RB set, and/or per SL BWP, and/or per SL carrier, and/or per congestion control level, and/or per transmission operation or reception operation, and/or per transmission power level, and/or per transmission starting time point, and/or per channel access procedure type for the transmission, and/or per LBT failure rate, and/or per whether the UE is a COT initiator, a COT responded UE, or another type of UE, and/or per cast type, and/or per whether SL HARQ-ACK feedback is enabled, and/or per HARQ-ACK feedback option, and/or per number of transmission attempts for the same information or TB.

For example, in order to secure transmission opportunities in a shared spectrum, channel sensing for a channel access procedure may be performed. For example, starting from a time point earlier than the transmission resource by the length of the channel sensing window, channel sensing may be performed over the channel sensing window, and the transmission based on the resource may be performed only if the result is idle.

For example, in a time period where Type 2 channel sensing (i.e., channel sensing related to the channel access procedure) is applied, if the time interval between time resources is less than or equal to 16usec and the result of channel sensing for the preceding resource is idle, channel sensing for the subsequent resource after that time interval may be omitted. For example, to perform multiple contiguous slot transmission (MCSt) in a shared spectrum, the time interval between resources needs to be less than or equal to 16usec.

For example, when the selection related to the CPE for both the starting transmission and the intermediate transmission of an inter-UE (e.g., SL) transmission burst is selected randomly as the same, the time gap from the previous transmission for some transmissions may exceed 16 usec, and in this case, the transmission opportunity may be reduced depending on the channel sensing result. On the other hand, when the selection related to the CPE is performed so that the time interval from the previous transmission for both the starting transmission and the intermediate transmission (e.g., in the case of the starting transmission, the delta value before the starting time point) is fixed to be less than or equal to 16 usec, a problem may occur in which the channel occupation for the starting transmission is delayed, thereby reducing the transmission opportunity.

According to an embodiment of the present disclosure, a random selection scheme for the CPE may be limited to be applied to only the first transmission of an SL transmission burst or multiple consecutive slot transmission. According to an embodiment of the present disclosure, when the time gap before CPE application between a first inter-UE (e.g., inter-UE or SL) transmission and a second inter-UE (e.g., inter-UE or SL) transmission of the same UE is in a 1- or 2-symbol range, the CPE interval applied to the second SL transmission may be determined so that the time gap between the two inter-UE transmissions is 16 usec.

For example, according to various embodiments of the present disclosure, by using the CPE, the opportunity for channel preemption may increase for both the start and middle transmissions of an SL transmission burst, and transmission opportunities may be maximized by ensuring that Type 2 channel access is performed.

According to an embodiment of the present disclosure, when a UE performs an inter-UE (e.g., PSSCH) transmission over consecutive symbols within a slot, the transmission may be performed according to constraints like the following.

For example, in relation to the channel access operation in shared spectrum of FR 1 and in the case of the first inter-UE (e.g., SL) transmission performed by the UE within the CO, if the UE performing the transmission within the CO is not configured with multiple CPE starting positions for the transmission within the shared CO through CPEStartingPositionsPSCCH-PSSCH-SharedCOT, in the case where the index for the delta value is randomly selected from a set of values configured per inter-UE transmission priority by a higher layer parameter CPEStartingPositionsPSCCH-PSSCH-SharedCOT and the UE determines the duration T ext, and if resource reservation is not transmitted or detected for the slot and RB set of the intended inter-UE transmission, the duration T_ext of the CPE may be determined according to the higher layer parameter DefaultCPEStartingPositionsPSCCH-PSSCH-SharedCOT, and otherwise, the UE may use the default CPE T_ext indicated by DefaultCPEStartingPositionsPSCCH-PSSCH-SharedCOT.

For example, in relation to the channel access operation in shared spectrum of FR 1, the corresponding UE, after performing an inter-UE (e.g., SL) transmission within the CO, may determine the CPE duration T_ext for another inter-UE transmission operation as follows.

For example, if the gap between an inter-UE transmission and the previous inter-UE transmission is 1 symbol, the index for the delta value may be set to 1.

For example, if the gap between an inter-UE transmission and the previous inter-UE transmission is 2 symbols, the delta value may be set to 3 when u = 1, and the delta value may be set to 2 when u = 2.

According to an embodiment of the present disclosure, the CPE applied to inter-UE may be applied based on parameters such as those shown in Table 16 below.

**[Table 16]**

| Index *i* | *µ* = 0 | | *µ* = 1 | | *µ* = 2 | |
|---|---|---|---|---|---|---|
| | *Cᵢ* | Δ*ᵢ* | *Cᵢ* | Δ*ᵢ* | *Cᵢ* | Δ*ᵢ* |
| 0 | - | - | - | - | - | - |
| 1 | 1 | 16 · 10⁻⁶ | 1 | 16 · 10⁻⁶ | 1 | 16 · 10⁻⁶ |
| 2 | 1 | 25 · 10⁻⁶ | 1 | 25 · 10⁻⁶ | 2 | 16 · 10⁻⁶ |
| 3 | 1 | 34 · 10⁻⁶ | 2 | 16 · 10⁻⁶ | 2 | 25 · 10⁻⁶ |
| 4 | 1 | 43 · 10⁻⁶ | 2 | 25 · 10⁻⁶ | - | - |
| 5 | 1 | 52 · 10⁻⁶ | 2 | 34 · 10⁻⁶ | - | - |
| 6 | 1 | 61 · 10⁻⁶ | 2 | 43 · 10⁻⁶ | - | - |
| 7 | - | - | 2 | 52 · 10⁻⁶ | - | - |
| 8 | - | - | 2 | 61 · 10⁻⁶ | - | - |

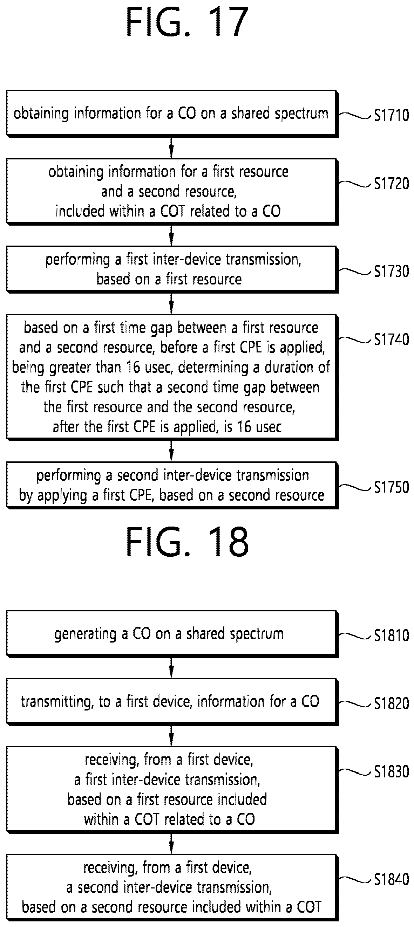

FIG. 17 shows a procedure for performing wireless communication by a first device according to an embodiment of the present disclosure. The embodiment of FIG. 17 may be combined with various embodiments of the present disclosure.

Referring to FIG. 17, in step S1710, a first device may obtain information for a channel occupancy, CO, on a shared spectrum. In step S1720, the first device may obtain information for a first resource and a second resource, included within a channel occupancy time, COT, related to the CO. In step S1730, the first device may perform a first inter-device transmission, based on the first resource. In step S1740, the first device may, based on a first time gap between the first resource and the second resource, before a first cyclic prefix extension, CPE, is applied, being greater than 16 usec, determine a duration of the first CPE such that a second time gap between the first resource and the second resource, after the first CPE is applied, is 16 usec. In step S1750, the first device may perform a second inter-device transmission by applying the first CPE, based on the second resource.

For example, determining the duration of the first CPE may include: determining a starting position of the first CPE.

For example, the first time gap may be 1 symbol or 2 symbols.

For example, the duration of the first CPE may be less than 1 symbol, based on the first time gap being 1 symbol.

For example, the duration of the first CPE may be greater than 1 symbol, based on the first time gap being 2 symbols.

For example, obtaining the information for the CO may include: generating the CO.

For example, the information for the CO may be received from a second device or a base station.

For example, a plurality of inter-device transmissions including the first inter-device transmission and the second inter-device transmission, performed based on a plurality of resources including the first resource and the second resource may be a multi consecutive slot transmission.

For example, the first resource may be a temporally first resource among the plurality of resources, and a starting position of a second CPE applied to the first resource may be randomly selected.

For example, the first resource may be not a temporally first resource among the plurality of resources.

For example, additionally, the first device may perform first channel sensing related to a first channel access procedure, for the first resource. For example, the first inter-device transmission may be performed based on a result of the first channel sensing being IDLE.

For example, based on the first inter-device transmission being performed and the second time gap being 16 usec, second channel sensing related to a second channel access procedure, for the second resource, may be omitted.

For example, the first channel access procedure may be a type 2 channel access procedure.

The above-described embodiments may be applied to various devices described below. For example, a processor 102 of a first device 100 may obtain information for a channel occupancy, CO, on a shared spectrum. And, the processor 102 of the first device 100 may obtain information for a first resource and a second resource, included within a channel occupancy time, COT, related to the CO. And, the processor 102 of the first device 100 may control a transceiver 106 to perform a first inter-device transmission, based on the first resource. And, the processor 102 of the first device 100 may, based on a first time gap between the first resource and the second resource, before a first cyclic prefix extension, CPE, is applied, being greater than 16 usec, determine a duration of the first CPE such that a second time gap between the first resource and the second resource, after the first CPE is applied, is 16 usec. And, the processor 102 of the first device 100 may control the transceiver 106 to perform a second inter-device transmission by applying the first CPE, based on the second resource.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations comprise: obtaining information for a channel occupancy, CO, on a shared spectrum; obtaining information for a first resource and a second resource, included within a channel occupancy time, COT, related to the CO; performing a first inter-device transmission, based on the first resource; based on a first time gap between the first resource and the second resource, before a first cyclic prefix extension, CPE, is applied, being greater than 16 usec, determining a duration of the first CPE such that a second time gap between the first resource and the second resource, after the first CPE is applied, is 16 usec; and performing a second inter-device transmission by applying the first CPE, based on the second resource.

For example, determining the duration of the first CPE may include: determining a starting position of the first CPE.

For example, the first time gap may be 1 symbol or 2 symbols.

For example, the duration of the first CPE may be less than 1 symbol, based on the first time gap being 1 symbol.

For example, the duration of the first CPE may be greater than 1 symbol, based on the first time gap being 2 symbols.

For example, obtaining the information for the CO may include: generating the CO.

For example, the information for the CO may be received from a second device or a base station.

For example, a plurality of inter-device transmissions including the first inter-device transmission and the second inter-device transmission, performed based on a plurality of resources including the first resource and the second resource may be a multi consecutive slot transmission.

For example, the first resource may be a temporally first resource among the plurality of resources, and a starting position of a second CPE applied to the first resource may be randomly selected.

For example, the first resource may be not a temporally first resource among the plurality of resources.

For example, additionally, the operations may further comprise: performing first channel sensing related to a first channel access procedure, for the first resource. For example, the first inter-device transmission may be performed based on a result of the first channel sensing being IDLE.

For example, based on the first inter-device transmission being performed and the second time gap being 16 usec, second channel sensing related to a second channel access procedure, for the second resource, may be omitted.

For example, the first channel access procedure may be a type 2 channel access procedure.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: obtaining information for a channel occupancy, CO, on a shared spectrum; obtaining information for a first resource and a second resource, included within a channel occupancy time, COT, related to the CO; performing a first inter-UE transmission, based on the first resource; based on a first time gap between the first resource and the second resource, before a first cyclic prefix extension, CPE, is applied, being greater than 16 usec, determining a duration of the first CPE such that a second time gap between the first resource and the second resource, after the first CPE is applied, is 16 usec; and performing a second inter-UE transmission by applying the first CPE, based on the second resource.

According to an embodiment of the present disclosure, a non-transitory computer-readable storage medium storing instructions may be proposed. For example, based on being executed, the instructions may cause a first device to: obtain information for a channel occupancy, CO, on a shared spectrum; obtain information for a first resource and a second resource, included within a channel occupancy time, COT, related to the CO; perform a first inter-device transmission, based on the first device; based on a first time gap between the first resource and the second resource, before a first cyclic prefix extension, CPE, is applied, being greater than 16 usec, determining a duration of the first CPE such that a second time gap between the first resource and the second resource, after the first CPE is applied, is 16 usec; and perform a second inter-device transmission by applying the first CPE, based on the second resource.

FIG. 18 shows a procedure for performing wireless communication by a second device according to an embodiment of the present disclosure. The embodiment of FIG. 18 may be combined with various embodiments of the present disclosure.

Referring to FIG. 18, in step S1810, a second device may generate a channel occupancy, CO, on a shared spectrum. In step S1820, the second device may transmit, to a first device, information for the CO. In step S1830, the second device may receive, from the first device, a first inter-device transmission, based on a first resource included within a channel occupancy time, COT, related to the CO. In step S1840, the second device may receive, from the first device, a second inter-device transmission, based on a second resource included within the COT. For example, based on a first time gap between the first resource and the second resource, before a first cyclic prefix extension, CPE, is applied, being greater than 16 usec, a duration of the first CPE applied to the second resource may be determined such that a second time gap between the first resource and the second resource, after the first CPE is applied, is 16 usec.

For example, the first time gap may be 1 symbol or 2 symbols.

The above-described embodiments may be applied to various devices described below. For example, a processor 202 of a second device 200 may generate a channel occupancy, CO, on a shared spectrum. And, the processor 202 of the second device 200 may control a transceiver 206 to transmit, to a first device 100, information for the CO. And, the processor 202 of the second device 200 may control the transceiver 206 to receive, from the first device 100, a first inter-device transmission, based on a first resource included within a channel occupancy time, COT, related to the CO. And, the processor 202 of the second device 200 may control the transceiver 206 to receive, from the first device 100, a second inter-device transmission, based on a second resource included within the COT. For example, based on a first time gap between the first resource and the second resource, before a first cyclic prefix extension, CPE, is applied, being greater than 16 usec, a duration of the first CPE applied to the second resource may be determined such that a second time gap between the first resource and the second resource, after the first CPE is applied, is 16 usec.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: generating a channel occupancy, CO, on a shared spectrum; transmitting, to a first device, information for the CO; receiving, from the first device, a first inter-device transmission, based on a first resource included within a channel occupancy time, COT, related to the CO; and receiving, from the first device, a second inter-device transmission, based on a second resource included within the COT, wherein based on a first time gap between the first resource and the second resource, before a first cyclic prefix extension, CPE, is applied, being greater than 16 usec, a duration of the first CPE applied to the second resource may be determined such that a second time gap between the first resource and the second resource, after the first CPE is applied, is 16 usec.

For example, the first time gap may be 1 symbol or 2 symbols.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

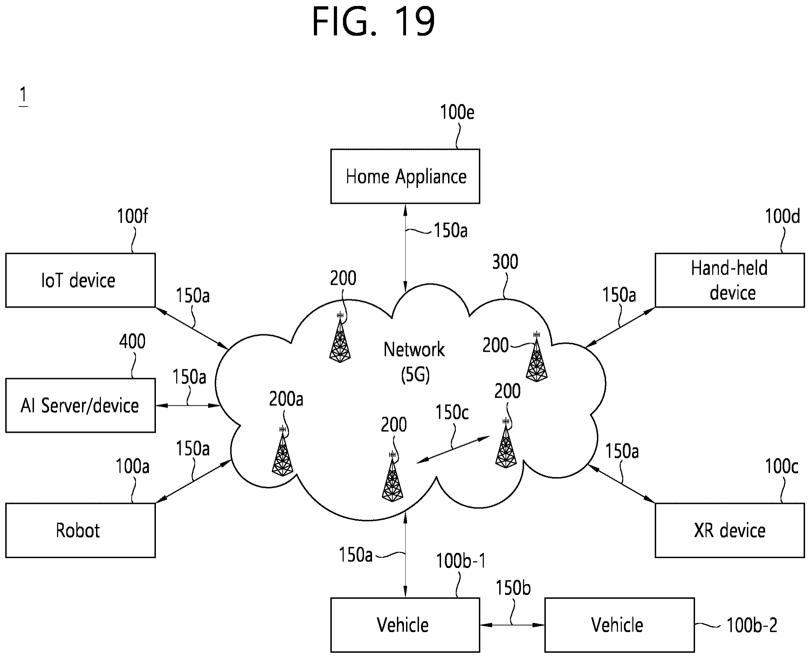

FIG. 19 shows a communication system 1, based on an embodiment of the present disclosure. The embodiment of FIG. 19 may be combined with various embodiments of the present disclosure.

Referring to FIG. 19, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

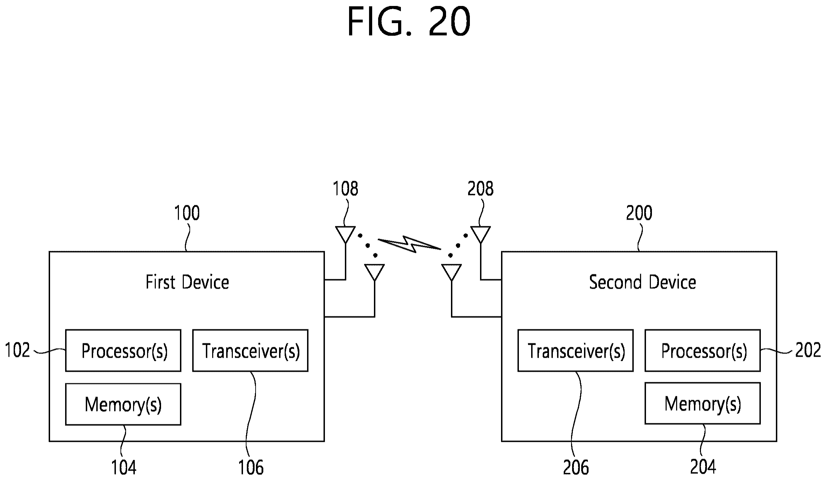

FIG. 20 shows wireless devices, based on an embodiment of the present disclosure. The embodiment of FIG. 20 may be combined with various embodiments of the present disclosure.

Referring to FIG. 20, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 19.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108, Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

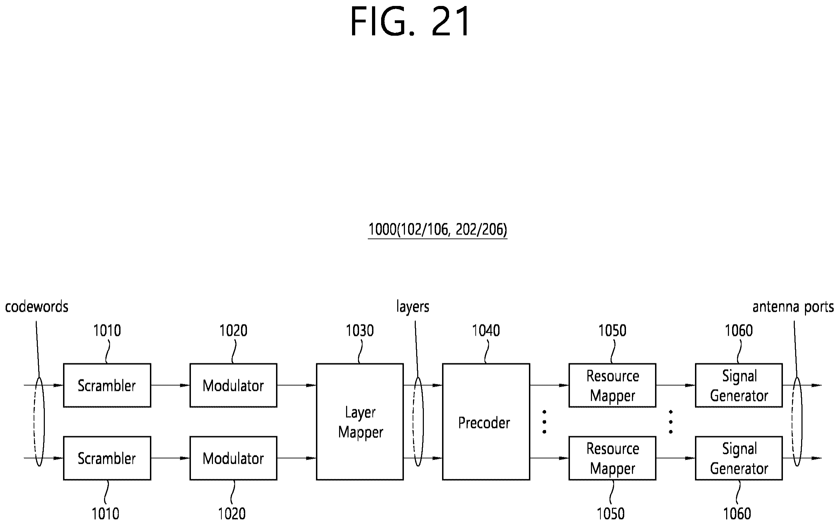

FIG. 21 shows a signal process circuit for a transmission signal, based on an embodiment of the present disclosure. The embodiment of FIG. 21 may be combined with various embodiments of the present disclosure.

Referring to FIG. 21, a signal processing circuit 1000 may include scramblers 1010, modulators 1020, a layer mapper 1030, a precoder 1040, resource mappers 1050, and signal generators 1060. An operation/function of FIG. 21 may be performed, without being limited to, the processors 102 and 202 and/or the transceivers 106 and 206 of FIG. 20. Hardware elements of FIG. 21 may be implemented by the processors 102 and 202 and/or the transceivers 106 and 206 of FIG. 20. For example, blocks 1010 to 1060 may be implemented by the processors 102 and 202 of FIG. 20. Alternatively, the blocks 1010 to 1050 may be implemented by the processors 102 and 202 of FIG. 20 and the block 1060 may be implemented by the transceivers 106 and 206 of FIG. 20.

Codewords may be converted into radio signals via the signal processing circuit 1000 of FIG. 21. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 21. For example, the wireless devices (e.g., 100 and 200 of FIG. 20) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

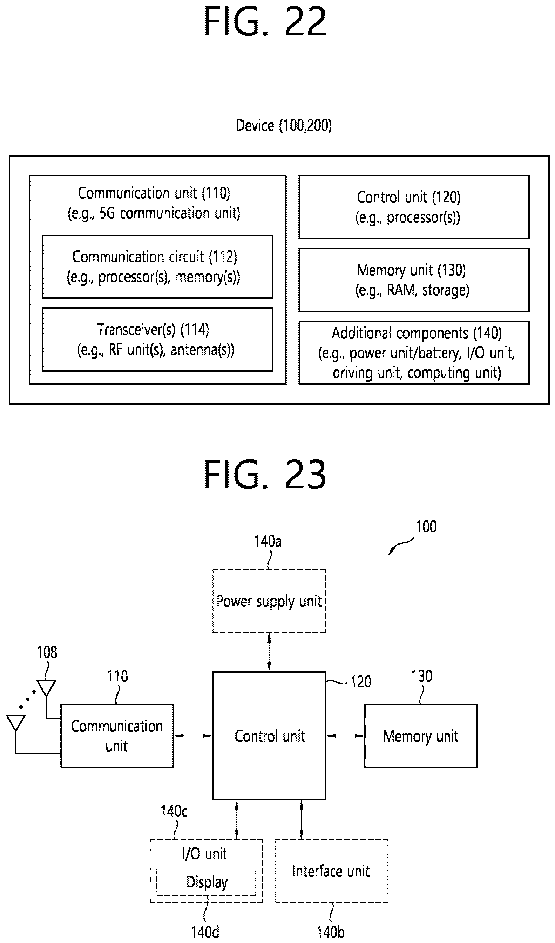

FIG. 22 shows another example of a wireless device, based on an embodiment of the present disclosure. The wireless device may be implemented in various forms according to a use-case/service (refer to FIG. 19). The embodiment of FIG. 22 may be combined with various embodiments of the present disclosure.

Referring to FIG. 22, wireless devices 100 and 200 may correspond to the wireless devices 100 and 200 of FIG. 20 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 20. For example, the transceiver(s) 114 may include the one or more transceivers 106 and 206 and/or the one or more antennas 108 and 208 of FIG. 20. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 19), the vehicles (100b-1 and 100b-2 of FIG. 19), the XR device (100c of FIG. 19), the hand-held device (100d of FIG. 19), the home appliance (100e of FIG. 19), the IoT device (100f of FIG. 19), a digital broadcast terminal, a hologram device, a public safety device, an MTC device, a medicine device, a fintech device (or a finance device), a security device, a climate/environment device, the AI server/device (400 of FIG. 19), the BSs (200 of FIG. 19), a network node, etc. The wireless device may be used in a mobile or fixed place according to a use-example/service.

In FIG. 22, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 22 will be described in detail with reference to the drawings.

FIG. 23 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless terminal (WT). The embodiment of FIG. 23 may be combined with various embodiments of the present disclosure.

Referring to FIG. 23, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 22, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

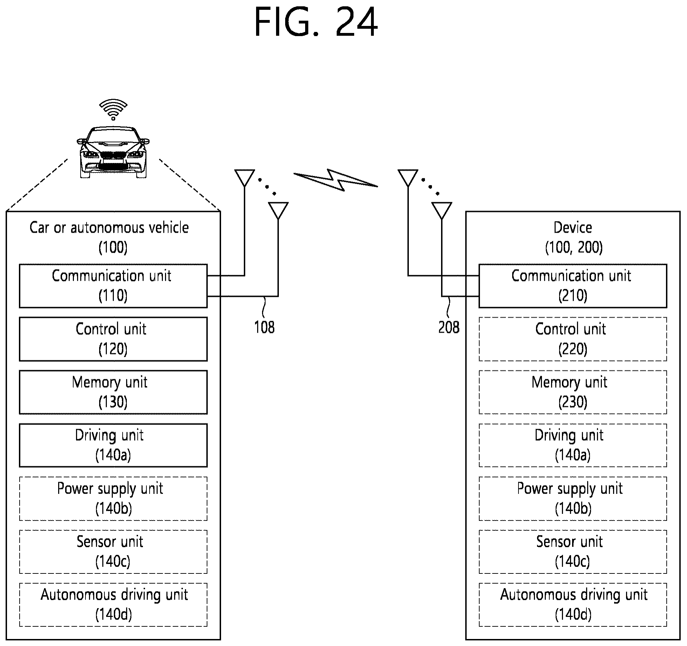

FIG. 24 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 24 may be combined with various embodiments of the present disclosure.

Referring to FIG. 24, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 22, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a conflict sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:
obtaining information for a channel occupancy, CO, on a shared spectrum;
obtaining information for a first resource and a second resource, included within a channel occupancy time, COT, related to the CO;
performing a first inter-device transmission, based on the first resource;
based on a first time gap between the first resource and the second resource, before a first cyclic prefix extension, CPE, is applied, being greater than 16 usec, determining a duration of the first CPE such that a second time gap between the first resource and the second resource, after the first CPE is applied, is 16 usec; and
performing a second inter-device transmission by applying the first CPE, based on the second resource.

2. The method of claim 1, wherein determining the duration of the first CPE includes:
determining a starting position of the first CPE.

3. The method of claim 1, wherein the first time gap is 1 symbol or 2 symbols.

4. The method of claim 3, wherein the duration of the first CPE is less than 1 symbol, based on the first time gap being 1 symbol.

5. The method of claim 3, wherein the duration of the first CPE is greater than 1 symbol, based on the first time gap being 2 symbols.

6. The method of claim 1, wherein obtaining the information for the CO includes:
generating the CO.

7. The method of claim 1, wherein the information for the CO is received from a second device or a base station.

8. The method of claim 1, wherein a plurality of inter-device transmissions including the first inter-device transmission and the second inter-device transmission, performed based on a plurality of resources including the first resource and the second resource is a multi consecutive slot transmission.

9. The method of claim 8, wherein the first resource is a temporally first resource among the plurality of resources, and
wherein a starting position of a second CPE applied to the first resource is randomly selected.

10. The method of claim 8, wherein the first resource is not a temporally first resource among the plurality of resources.

11. The method of claim 1, further comprising:
performing first channel sensing related to a first channel access procedure, for the first resource,
wherein the first inter-device transmission is performed based on a result of the first channel sensing being IDLE.

12. The method of claim 11, wherein based on the first inter-device transmission being performed and the second time gap being 16 usec, second channel sensing related to a second channel access procedure, for the second resource, is omitted.

13. The method of claim 11, wherein the first channel access procedure is a type 2 channel access procedure.

14. A first device for performing wireless communication, the first device comprising:
at least one transceiver;
at least one processor; and
at least one memory operably connected to the at least one processor and storing instructions that, based on being executed by the at least one processor, cause the first device to perform operations,
wherein the operations comprise:
obtaining information for a channel occupancy, CO, on a shared spectrum;
obtaining information for a first resource and a second resource, included within a channel occupancy time, COT, related to the CO;
performing a first inter-device transmission, based on the first resource;
based on a first time gap between the first resource and the second resource, before a first cyclic prefix extension, CPE, is applied, being greater than 16 usec, determining a duration of the first CPE such that a second time gap between the first resource and the second resource, after the first CPE is applied, is 16 usec; and
performing a second inter-device transmission by applying the first CPE, based on the second resource.

15. A device adapted to control a first user equipment, UE, the device comprising:
at least one processor; and
at least one memory operably connected to the at least one processor and storing instructions that, based on being executed by the at least one processor, cause the first UE to perform operations,
wherein the operations comprise:
obtaining information for a channel occupancy, CO, on a shared spectrum;
obtaining information for a first resource and a second resource, included within a channel occupancy time, COT, related to the CO;
performing a first inter-UE transmission, based on the first resource;
based on a first time gap between the first resource and the second resource, before a first cyclic prefix extension, CPE, is applied, being greater than 16 usec, determining a duration of the first CPE such that a second time gap between the first resource and the second resource, after the first CPE is applied, is 16 usec; and
performing a second inter-UE transmission by applying the first CPE, based on the second resource.

16. A non-transitory computer-readable storage medium storing instructions that, based on being executed, cause a first device to:
obtain information for a channel occupancy, CO, on a shared spectrum;
obtain information for a first resource and a second resource, included within a channel occupancy time, COT, related to the CO;
perform a first inter-device transmission, based on the first device;
based on a first time gap between the first resource and the second resource, before a first cyclic prefix extension, CPE, is applied, being greater than 16 usec, determining a duration of the first CPE such that a second time gap between the first resource and the second resource, after the first CPE is applied, is 16 usec; and
perform a second inter-device transmission by applying the first CPE, based on the second resource.

17. A method for performing, by a second device, wireless communication, the method comprising:
generating a channel occupancy, CO, on a shared spectrum;
transmitting, to a first device, information for the CO;
receiving, from the first device, a first inter-device transmission, based on a first resource included within a channel occupancy time, COT, related to the CO; and
receiving, from the first device, a second inter-device transmission, based on a second resource included within the COT,
wherein based on a first time gap between the first resource and the second resource, before a first cyclic prefix extension, CPE, is applied, being greater than 16 usec, a duration of the first CPE applied to the second resource is determined such that a second time gap between the first resource and the second resource, after the first CPE is applied, is 16 usec.

18. The method of claim 17, wherein the first time gap is 1 symbol or 2 symbols.

19. A second device for performing wireless communication, the second device comprising:
at least one transceiver;
at least one processor; and
at least one memory operably connected to the at least one processor and storing instructions that, based on being executed by the at least one processor, cause the second device to perform operations,
wherein the operations comprise:
generating a channel occupancy, CO, on a shared spectrum;
transmitting, to a first device, information for the CO;
receiving, from the first device, a first inter-device transmission, based on a first resource included within a channel occupancy time, COT, related to the CO; and
receiving, from the first device, a second inter-device transmission, based on a second resource included within the COT,
wherein based on a first time gap between the first resource and the second resource, before a first cyclic prefix extension, CPE, is applied, being greater than 16 usec, a duration of the first CPE applied to the second resource is determined such that a second time gap between the first resource and the second resource, after the first CPE is applied, is 16 usec.

20. The second device of claim 19, wherein the first time gap is 1 symbol or 2 symbols.
